# EUROPÄISCHE PATENTSCHRIFT

(11) **EP 1 838 550 B1**
(45) Veröffentlichungstag und Bekanntmachung des Hinweises auf die Patenterteilung: **16.04.2008**
(21) Anmeldenummer: 06705834.7
(22) Anmeldetag: 18.01.2006
(51) Int. Cl.: B60K 35/00, B62D 1/06, G08B 21/06

(54) **LENKRADBAUGRUPPE FÜR EIN KRAFTFAHRZEUG**
STEERING WHEEL ASSEMBLY FOR A MOTOR VEHICLE
ENSEMBLE VOLANT DE DIRECTION POUR UN VÉHICULE AUTOMOBILE

(30) Priorität: 19.01.2005 DE 102005003187; 19.01.2005 US 644575 P; 10.11.2005 DE 102005054640
(43) Veröffentlichungstag der Anmeldung: 03.10.2007
(73) Patentinhaber: Takata-Petri AG, 63743 Aschaffenburg (DE)
(72) Erfinder: PROST-FIN, Marc, 13187 Berlin (DE); KEUDEL, Friederike, 10439 Berlin (DE); NEUMANN, Delf, 12555 Berlin (DE)
(74) Vertreter: Baumgärtel, Gunnar
(86) Internationale Anmeldenummer: PCT/DE2006/000096
(87) Internationale Veröffentlichungsnummer: WO 2006/076904

(56) Entgegenhaltungen:
- EP-A- 1 302 372
- EP-A- 1 484 234
- DE-A1- 3 912 359
- DE-A1- 10 109 680
- DE-A1- 10 241 267
- DE-A1- 10 303 010
- DE-A1- 10 352 733
- DE-C1- 19 646 104
- DE-U1- 20 014 731
- US-A- 5 197 562
- US-A- 5 477 457
- US-A1- 2004 209 594

## Beschreibung

Die Erfindung betrifft eine Lenkradbaugruppe für ein Kraftfahrzeug gemäss dem Oberbegriff des Anspruchs 1 sowie ein Verfahren zum Regeln eines Grenzwertes der Geschwindigkeit eines Fahrzeuges.

Derartige Lenkradbaugruppen weisen zumindest ein Lenkrad auf, das in der Regel mit einem um eine Lenkachse drehbar gelagerten Nabenkörper versehen ist, der über zumindest eine Speiche mit einem Lenkradkranz verbunden ist, der wiederum den Nabenkörper bzw. die Lenkachse (quer zur Lenkachse) zumindest abschnittsweise umläuft. Der Lenkradkranz kann hierbei insbesondere in sich geschlossen ausgebildet sein, so dass er den Nabenkörper ringförmig umläuft.

Das Dokument EP-A-1 302 372 offenbart eine Lenkradbaugruppe für ein Kraftfahrzeug, mit einem Lenkrad, und einer am Lenkrad angeordneten Anzeigeeinrichtung, die mit einer an dem Kraftfahrzeug anzuordnenden Sensoreinrichtung zum Ermitteln mindestens einer Zustandsgröße eines Kraftfahrzeuges in Wirkverbindung steht und die zum Anzeigen der mittels der Sensoreinrichtung ermittelten Zustandsgröße vorgesehen ist, wobei mit der Sensoreinrichtung eine Funktionseinheit des Kraftfahrzeuges zum Weiterleiten von Energie und oder Informationen gekoppelt ist.

Das Dokument DE 103 03 010 A1offenbart ein Verfahren zum Regeln eines Grenzwertes der Geschwindigkeit eines Kraftfahrzeuges, umfassend die folgenden Schritte:
- Ermitteln eines Grenzwertes der Geschwindigkeit eines Kraftfahrzeuges mittels der Sensoreinrichtung, und
- Anzeigen des durch die Sensoreinrichtung ermittelten Grenzwertes der Geschwindigkeit mittels der Anzeigeeinrichtung, wobei einem Fahrer mittels des Tempomats über die Anzeigeeinrichtung die Annahme eines durch die Sensoreinrichtung ermittelten Grenzwertes der Geschwindigkeit vorgeschlagen wird.

Der Erfindung liegt das Problem zu Grunde, eine Lenkradbaugruppe für ein Kraftfahrzeug bereitzustellen, die den Komfort und die Sicherheit eines Kraftfahrzeuges erhöht.

Dieses Problem wird durch eine Lenkradbaugruppe mit den Merkmalen des Anspruchs 1 gelöst.

Erfindungsgemäß umfasst die Lenkradbaugruppe ein Lenkrad und eine am Lenkrad angeordnete Anzeigeeinrichtung, die mit einer an dem Kraftfahrzeug anzuordnenden Sensoreinrichtung zum Ermitteln mindestens einer Zustandsgröße eines Kraftfahrzeuges in Wirkverbindung steht und die zum Anzeigen der mittels der Sensoreinrichtung ermittelten Zustandsgröße vorgesehen ist, wobei mit der Sensoreinrichtung eine Funktionseinheit des Kraftfahrzeuges zum Weiterleiten oder Umwandeln von Energie und / oder Informationen gekoppelt ist und die Funktionseinheit dazu eingerichtet und vorgesehen ist, einem Fahrer über die Anzeigeeinrichtung einen Vorschlag für eine Einstellung einer Zustandsgröße des Kraftfahrzeuges anzuzeigen, und wobei der Funktionseinheit eine Betätigungseinheit des Kraftfahrzeuges zugeordnet ist, mit der gemäß des Vorschlages der Funktionseinheit die Zustandsgröße einstellbar ist.

Bei der erfindungsgemäßen Lenkradbaugruppe findet nämlich durch die Anordnung der Anzeigeeinrichtung am Lenkrad die Anzeige der Zustandsgröße im ständigen Blickfeld eines Fahrers statt, wodurch die Anzeige stets sehr gut sichtbar ist und die Aufmerksamkeit des Fahrers durch Betrachten der Anzeigeeinrichtung nicht wesentlich vom umgebenden Verkehrsgeschehen abgezogen wird. Dies führt insgesamt zu einer Verbesserung des Komforts und der Sicherheit eines Kraftfahrzeuges, wobei diese Vorteile bereits wesentlich durch eine Lenkradbaugruppe mit einem Lenkrad und einer am Lenkrad angeordneten Anzeigeeinrichtung, die mit einer an dem Kraftfahrzeug anzuordnenden Sensoreinrichtung zum Ermitteln einer Zustandsgröße eines Kraftfahrzeuges in Wirkverbindung steht und die zum Anzeigen der mittels der Sensoreinrichtung ermittelten Zustandsgröße vorgesehen ist, erzielt werden. Durch die mit der Sensoreinrichtung prinzipiell nicht zwingend gekoppelte Funktionseinheit werden zusätzliche Vorteile erzielt.

Die von der Sensoreinrichtung ermittelbare Zustandsgröße umfasst auch Grenzwerte der Zustandsgröße, die z.B. von außen vorgegeben werden, und die durch die Sensoreinrichtung ermittelbar sind.

Bei der Funktionseinheit kann es sich beispielsweise um einen Tempomat zum Regeln der Geschwindigkeit eines Kraftfahrzeuges auf einen Grenzwert der Geschwindigkeit (Tempolimit) handeln oder beispielsweise um eine Auswerteelektronik, die in Abhängigkeit von einer momentanen Drehzahl eines Motors und eines momentanen Ganges eines Getriebes des Kraftfahrzeuges einen zu verwendenden Gang ermittelt. Gleichfalls kann durch den Tempomat die Geschwindigkeit eines Kraftfahrzeuges an einen vorgebbaren Abstand (Sicherheitsabstand) zu einem vorausfahrenden Kraftfahrzeug angepasst werden. Ebenso kann es sich bei einer solchen Funktionseinheit um eine Steuerelektronik handeln, die zum automatischen Einparken eines Kraftfahrzeuges eingerichtet und vorgesehen ist.

Erfindungsgemäss ist die Betätigungseinrichtung, die zum Betätigen (Aktivieren, Deaktivieren und Regeln) der Funktionseinheit dient, am Lenkrad angeordnet. Das Lenkrad kann beispielsweise einen drehbar um eine Lenkachse gelagerten Nabenkörper aufweisen, an dem über zumindest eine Speiche ein den Nabenkörper quer zur Lenkachse zumindest teilweise umlaufender Lenkradkranz befestigt sein kann. Die Betätigungseinrichtung kann nun an der Speiche, dem Lenkradkranz sowie dem Nabenkörper angeordnet sein. Mit Vorteil ist die Betätigungseinrichtung derart am Lenkrad angeordnet, dass Sie von einem Fahrer betätigt werden kann, ohne dass dieser die Hände vom Lenkrad nehmen muss.

Erfindungsgemäss umfasst die Einstellung der Zustandsgröße eine Bestätigung oder eine Änderung der Zustandsgröße, die mittels der Betätigungseinrichtung vorgenommen werden kann, die zur Annahme und Ablehnung des Vorschlages durch Einwirken auf die Betätigungseinrichtung ausgebildet und vorgesehen ist. Wird also beispielsweise ein aktuell durch die Sensoreinrichtung ermittelter (beispielsweise von außen vorgegebener) Grenzwert der Geschwindigkeit vorgeschlagen, kann der Fahrer diesen mittels einer einmaligen Betätigung der Betätigungseinrichtung annehmen, ablehnen oder verstellen, d.h., den vorgeschlagenen Grenzwert der Geschwindigkeit hoch- bzw. heruntersetzen und ggf. sofort oder später annehmen.

In einer Variante der Erfindung sieht die Funktionseinheit einen vordefinierbaren Zeitraum vor, innerhalb dessen die Betätigungseinrichtung zur wirksamen Annahme des Vorschlages betätigt werden muss.

Durch die vorstehenden erfindungsgemäßen Maßnahmen kann ein Fahrer ein Kraftfahrzeug komfortabel und sicher führen, wobei bei einer derartigen Gestaltung einer Schnittstelle Mensch/Maschine die Eigenverantwortung des Fahrers nicht beschnitten wird.

In einem besonders bevorzugten Ausführungsbeispiel der Erfindung ist die Funktionseinheit als ein Tempomat ausgebildet, der zum Begrenzen der momentanen Geschwindigkeit (Zustandsgröße) eines in einem Fahrzustand sich befindenden Kraftfahrzeuges auf einen Grenzwert der Geschwindigkeit (Tempolimit) dient. In einer Variante der Erfindung regelt der Tempomat bevorzugt die Geschwindigkeit des Kraftfahrzeuges auf den mittels der Anzeigeeinrichtung angezeigten Grenzwert der Geschwindigkeit. D.h., der Tempomat bewirkt eine im Wesentlichen konstante Geschwindigkeit, die dem aktuellen (vorgeschriebenen) Tempolimit entsprechen kann.

Bevorzugt ist vorgesehen, dass der Vorschlag den durch die Sensoreinrichtung ermittelten Grenzwert der Geschwindigkeit zur Annahme stellt, wobei die Annahme des Vorschlages die Begrenzung der Geschwindigkeit des Kraftfahrzeuges auf den Grenzwert der Geschwindigkeit durch den Tempomat bewirkt.

In einer alternativen Variante der Erfindung ist die Zustandsgröße ein Abstand zu einem vorausfahrenden Fahrzeug. Bevorzugt stellt der Vorschlag der Funktionseinheit (Tempomat) einen solchen Abstand zu einem vorausfahrenden Fahrzeug zur Annahme, wobei die Annahme des Vorschlages die Regelung der Geschwindigkeit des Kraftfahrzeuges durch den Tempomat derart bewirkt, dass der Abstand zum vorausfahrenden Fahrzeug im Wesentlichen konstant gehalten wird.

Zur Übernahme des durch die Anzeigeeinrichtung angezeigten Grenzwertes der Geschwindigkeit (Tempolimit) reicht insbesondere eine einmalige Betätigung der Betätigungseinrichtung. Diese kann beispielsweise als ein Druckschalter ausgebildet sein, der zur Aktivierung des Tempomats bzw. zur Bestätigung des mittels der Anzeigeeinrichtung angezeigten Grenzwertes der Geschwindigkeit einmalig gedrückt wird.

Auf diese Weise kann der Tempomat komfortabel aktiviert werden, wobei gleichzeitig auf Grund der Anzeige des Tempolimits im Sichtfeld eines Fahrers die Aufmerksamkeit des Fahrers nicht vom Verkehrsgeschehen abgezogen wird, was die Sicherheit des Kraftfahrzeuges insgesamt erhöht.

In einer Variante der Erfindung ist vorgesehen, dass die Funktionseinheit einen mittels der Betätigungseinrichtung aktivierbaren Toleranzbereich vorsieht, um den die Zustandsgröße einen Grenzwert der Zustandgröße unterschreiten und / oder überschreiten soll.

Vorzugsweise ist die Sensoreinrichtung dazu vorgesehen und eingerichtet, einen (aktuellen) Grenzwert der Zustandsgröße von einer Anzeige in einer Umgebung eines Kraftfahrzeuges abzulesen. Weiterhin ist bevorzugt die Sensoreinrichtung dazu vorgesehen und eingerichtet den Grenzwert der Zustandsgröße aus einer Datenbank, insbesondere eine GPS-Datenbank, auszulesen.

Bei einer Funktionseinheit in Form eines Tempomats, der als Zustandsgröße die Geschwindigkeit des Kraftfahrzeuges auf einen Grenzwert der Geschwindigkeit begrenzt bzw. regelt kann der aktuell vorgegebene Grenzwert der Geschwindigkeit der Lenkradbaugruppe also beispielsweise mittels eines optischen Sensors (z.B. Digitalkamera) von einem Straßenschild oder einer sonstige Anzeige abgelesen werden. In einer weiteren Variante der Erfindung ist die Sensoreinrichtung dazu vorgesehen und eingerichtet, den Grenzwert der Zustandsgröße (z.B. ein vorgeschriebenes Tempolimit) aus einem in einer Umgebung eines Kraftfahrzeuges angeordneten Informationsspeicher auszulesen. Weiterhin kann der Grenzwert der Zustandsgröße (z.B. ein vorgeschriebenes Tempolimit) mittels RFID (Radiofrequenzidentifizierung) an die Lenkradaugruppe übermittelt werden (z.B. über einen stationären Transponder in einer Umgebung des Kraftfahrzeuges als ein Speichermedium für einen am Ort des Transponders vorgegebenen Grenzwert der Geschwindigkeit, der durch eine am Kraftfahrzeug angeordnete Sensoreinrichtung ausgelesen werden kann).

In einem weiteren Ausführungsbeispiel der Erfindung ist eine Übertragungseinheit vorgesehen, die zum Übertragen von Ausgangssignalen der Sensoreinrichtung zur Anzeigeeinrichtung dient.

In einer bevorzugten Variante der Erfindung ist vorgesehen, dass als Zustandsgrößen eine momentane Drehzahl eines Motors und / oder ein Gang eines Getriebes eines Kraftfahrzeuges durch die Sensoreinrichtung ermittelt werden, wobei bevorzugt der durch die Funktionseinheit ermittelte Vorschlag einen zu verwendenden Gang betrifft, dessen Annahme durch einen Fahrer bei Kraftfahrzeugen mit einem Automatikgetriebe ein automatisches Einlegen des vorgeschlagenen Ganges bewirkt.

In einer Variante der Erfindung ist die Funktionseinheit als eine mit der Anzeigeeinrichtung verbundene Auswertelektronik ausgebildet, die dazu eingerichtet und vorgesehen ist, den Vorschlag betreffend eines zu verwendenden Ganges zumindest in Abhängigkeit von der momentanen Drehzahl und dem momentanen Gang zu bestimmen und einem Fahrer über die Anzeigeeinrichtung anzuzeigen.

In einer alternativen Variante der Erfindung ist die Sensoreinrichtung zur Erfassung weiterer Zustandsgrößen eines Kraftfahrzeuges ausgebildet, die bevorzugt mittels der Anzeigeeinrichtung anzeigbar sind, wobei diese Zustandsgrößen vorzugsweise Abstände zwischen einem Kraftfahrzeug und Objekten in einer Umgebung des Kraftfahrzeuges sind.

Bevorzugt ist die Sensoreinrichtung dazu vorgesehen und eingerichtet, die Abstände in eine Größe einer Abstellfläche umzusetzen. Hierbei ist die Sensoreinrichtung vorzugsweise dazu vorgesehen und eingerichtet zu ermitteln, ob eine Abstellfläche in der Umgebung des Kraftfahrzeuges groß genug ist, um das Kraftfahrzeug auf dieser Abstellfläche zu parken. Weiterhin ist die Sensoreinrichtung bevorzugt dazu ausgebildet, über die Anzeigeeinrichtung Informationen über eine Abstellfläche anzuzeigen.

In einer Variante der Erfindung ist die Funktionseinheit als eine mit der Sensoreinrichtung verbundene Steuerelektronik ausgebildet, die zum automatischen Einparken eines Kraftfahrzeuges eingerichtet und vorgesehen ist.

In einem Ausführungsbeispiel der Erfindung ist die Anzeigeeinrichtung an einem Lenkradkranz des Lenkrades angeordnet, der eine Lenkachse des Lenkrades (quer zur Lenkachse) zumindest abschnittsweise umläuft, wobei bevorzugt die Anzeigeeinrichtung in einer Geradeausfahrtstellung des Lenkrades - bezogen auf einen in ein Kraftfahrzeug eingebauten Zustand des Lenkrades - entlang der vertikalen Fahrzeugachse oberhalb der Lenkachse angeordnet ist, und zwar insbesondere in 12 Uhr-Stellung. Die Anzeigeeinrichtung wird also mit Vorteil bevorzugt derart am Lenkradkranz positioniert, dass sie bei Geradeausfahrtstellung des Lenkradkranzes entlang der vertikalen Fahrzeugachse an einem höchsten Punkt des Lenkradkranzes angeordnet ist. Hierdurch kann die Anzeigeeinrichtung besonders leicht von einem Fahrer betrachtet werden, da der Fahrer zum Betrachten der Anzeigeeinrichtung seine Blickrichtung im Vergleich zur Geradeausblickrichtung (parallel zur Fahrzeuglängsachse) nur geringfügig ändern muss. Die Anzeigeeinrichtung befindet sich somit stets im Blickfeld des Fahrers, so dass einfache (deutliche) optische Signale stets wahrgenommen werden können, auch wenn die Anzeigeeinrichtung nicht durch den Fahrer fokussiert wird.

In einer weiteren Variante der Erfindung ist zumindest eine am Lenkrad angeordnete Erfassungseinrichtung zum Ermitteln eines Aufmerksamkeitszustandes eines Fahrers eines Kraftfahrzeuges vorgesehen, wobei die Erfassungseinrichtung zum Ansteuern der Anzeigeeinrichtung in Abhängigkeit von dem ermittelten Aufmerksamkeitszustand des Fahrers dient.

Der Aufmerksamkeitszustand eines Fahrers lässt sich anhand verschiedener Indikatoren messen, d.h., klassifizieren. Derartige Indikatoren sind z.B. die Blickrichtung des Fahrers, wobei insbesondere von Bedeutung ist, wie lange (zeitlich) die Blickrichtung von der Geradeausblickrichtung abweicht. Dies kann mit Hilfe einer Erfassungseinrichtung ermittelt werden.

In einer besonders' bevorzugten Variante der Erfindung ist die Erfassungseinrichtung, beispielsweise zur Erfassung der Blickrichtung eines Fahrers, als eine Kamera (z.B. Digitalkamera) ausgebildet. Eine Auswertung eines von der Kamera erfassten Bildausschnitts geschieht mit Hilfe einer geeigneten Bilderkennungssoftware. Alternativ kann es sich bei der Erfassungseinrichtung auch um einen optischen Sensor handeln (beispielsweise eine Kombination aus einem Lichtsender und einem Lichtempfänger).

Vorzugsweise ist die Erfassungseinrichtung benachbart zur Anzeigeeinrichtung angeordnet. Dies ist vorteilhaft, da hierdurch die Wahrscheinlichkeit herabgesetzt wird, dass die Erfassungseinrichtung beim Führen des Kraftfahrzeuges durch die Hand eines Fahrers abgedeckt wird, da ein Fahrer in der Regel die Anzeigeeinrichtung, insbesondere eine optische Anzeige, nicht mit seinen Händen abdecken wird, um diese in ihrer Funktionalität nicht einzuschränken.

In einer Variante der Erfindung ist vorgesehen, dass die Erfassungseinrichtung am Lenkradkranz angeordnet ist.

Besonders bevorzugt ist die Erfassungseinrichtung, beispielsweise in Form einer Kamera, in einer Geradeausfahrtstellung des Lenkrades entlang der vertikalen Fahrzeugachse oberhalb der Lenkachse angeordnet, insbesondere in 12 Uhr-Stellung.

Vorzugsweise weist die Anzeigeeinrichtung zumindest zwei Anzeigeelemente auf (z.B. einen Bildschirm und ein benachbartes LED-Feld, wobei ein solches Anzeigeelement auch mehrere LED-Felder umfassen kann. Besonders bevorzugt ist die Erfassungseinrichtung entlang des Lenkradkranzes, d.h., entlang einer Drehrichtung des Lenkradkranzes zwischen den zumindest zwei Anzeigenelementen angeordnet.

Vorzugsweise ist hierbei der Abstand zwischen der Erfassungseinrichtung und jeweils einem der zumindest zwei Anzeigeelementen der Anzeigeeinrichtung entlang des Lenkradkranzes kleiner als die Breite zumindest eines der beiden Anzeigeelemente entlang des Lenkradkranzes (d.h., entlang der Drehrichtung des Lenkradkranzes). Die Erfassungseinrichtung weist also eine nur geringe Beabstandung zu zumindest einem der beiden Anzeigeelementen entlang der Drehrichtung auf.

In einer weiteren Variante der Erfindung ist eine Mehrzahl von Erfassungseinrichtungen vorgesehen, insbesondere in Form von Kameras (z.B. Digitalkameras), wobei bevorzugt die Erfassungseinrichtungen derart entlang des Lenkradkranzes angeordnet sind, dass zumindest eine der Erfassungseinrichtungen unabhängig von einer Stellung des Lenkrades entlang der vertikalen Fahrzeugachse oberhalb der Lenkachse angeordnet ist.

Mit Vorteil kann die eine Erfassungseinrichtung und / oder die weiteren Erfassungseinrichtungen auch dazu verwendet werden, um andere Warn- bzw. Sicherheitseinrichtungen, wie beispielsweise eine Sitzrampe oder einen motorisierten Sicherheitsgurt, abhängig von einem Aufmerksamkeitszustand eines Fahrers zu steuern.

In einer Variante der Erfindung weist das Lenkrad einen um die Lenkachse drehbaren Nabenkörper auf, der über zumindest eine Speiche mit dem Lenkradkranz des Lenkrades verbunden ist. Bevorzugt ist ein Bereich des Lenkradkranzes vorgesehen, der die zumindest eine Anzeigeeinrichtung umfasst.

Weiterhin ist vorzugsweise ein am Nabenkörper angeordnetes Gassackmodul vorgesehen, mit einem Gassack, der zum Schutz eines Fahrers in einer entlang der Lenkachse verlaufenden Hauptentfaltungsrichtung entfaltbar ist und beim Entfalten quer zur Lenkachse gegen den Bereich des Lenkradkranzes stoßen kann, wobei der Bereich des Lenkradkranzes bevorzugt derart mit dem Gassack zusammenwirkt, dass dieser zum Schutz des Lenkradkranzes und des Gassackes und insbesondere der Anzeigeeinrichtung in Hauptentfaltungsrichtung abgelenkt wird.

Vorzugsweise weist der Bereich zum Ablenken eines sich entfaltenden Gassackes eine Ablenkschräge auf, d.h., er ist teilweise bezüglich einer Hauptentfaltungsrichtung des Gassackes, die mit der Lenkachse des Lenkrades zusammenfällt, geneigt. Die Neigung kann derart ausgebildet sein, dass der Gassack unter dem gleichen Winkel auf den Bereich auftrifft (Einfallswinkel) unter dem er auch abgelenkt wird (Ausfallswinkel). Beide Winkel werden hierbei in Bezug auf eine Normale gemessen, die senkrecht auf einem Auftreffbereich des Lenkradkranzes steht, auf den der Gassack beim Entfalten auftrifft.

Weiterhin weist der Bereich zum Ablenken des sich entfaltenden Gassackes vorzugsweise eine Oberfläche mit einem niedrigen Reibungskoeffizienten auf, vorzugsweise ist dieser geringer als der Reibungskoeffizient angrenzender Bereiche des Lenkradkranzes. Wesentlich hierbei ist, dass die Oberfläche so gestaltet ist, dass die Reibung zwischen der Oberfläche und dem Gassack möglichst gering ist, der Gassack also leicht an dem Bereich abgleiten kann. In Abhängigkeit des Gassackmaterials kann die Oberfläche des Bereiches, an dem der Gassack abgleiten soll, beispielsweise besonders glatt ausgebildet sein.

Die vorstehend beschriebene Formgebung des zum Ablenken des Gassackes dienenden Bereiches des Lenkradkranzes (bzw. die Beschaffenheit der Oberfläche dieses Bereiches) schützt nicht nur den Lenkradkranz und die Anzeigeeinrichtung vor einem sich entfaltenden Gassack, sondern auch den Gassack selbst, was die Sicherheit eines Kraftfahrzeuges weiter verbessert.

Besonders bevorzugt ist die Anzeigeeinrichtung als eine optische Anzeige ausgebildet. Hierbei weist die optische Anzeige vorzugsweise zumindest eine LED (Leuchtdiode) auf.

Vorzugsweise ist die optische Anzeige weiterhin durch eine Mehrzahl von LEDs gebildet und weist bevorzugt ein LED-Feld auf, dessen LEDs derart ansteuerbar sind, dass (entsprechend der Anzahl der LEDs) grafische Symbole dargestellt werden können. Ein derartiges LED-Feld kann auch zeilenförmig ausgebildet sein.

In einer besonders bevorzugten Variante der Erfindung weist die optische Anzeige zumindest einen Bildschirm auf. Hierbei handelt es sich vorzugsweise um ein LCD (Flüssigkristallanzeige). Es können aber auch andere Darstellungstechniken verwendet werden.

In einer alternativen Variante ist die Anzeigeeinrichtung als eine akustische Anzeige oder eine haptische Anzeige ausgebildet. Es ist natürlich möglich, optische, akustische und haptische Anzeigen miteinander zu kombinieren. Bei den haptischen Anzeigen handelt es sich beispielsweise um Vibratoren, die bevorzugt am Lenkradkranz angeordnet sind. Damit diese in jeder Griffposition spürbar sind, kann eine solche haptische Anzeige den Lenkradkranz ringförmig umlaufen (in der Drehrichtung des Lenkradkranzes, entlang der der Lenkradkranz drehbar ist). Haptische Anzeigen werden vorteilhaft an denjenigen Bereichen eines Kraftfahrzeug angeordnet, die dauerhaft in Kontakt mit einer Person, insbesondere dem Fahrer sind (Lenkrad, Sitz etc.).

Ein weiterer Gedanke der Erfindung ist ein Verfahren zum Regeln eines Grenzwertes der Geschwindigkeit eines Kraftfahrzeuges, bei dem des Grenzwert mittels der Sensoreinrichtung ermittelt wird, und die durch die Sensoreinrichtung ermittelte Zustandsgröße mittels der Anzeigeeinrichtung angezeigt wird, wobei bevorzugt der Grenzwert der Geschwindigkeit als eine Zustandsgröße des Kraftfahrzeuges ermittelt wird.

Die Geschwindigkeit des Kraftfahrzeuges wird mittels eines Tempomats auf den Grenzwert der Geschwindigkeit geregelt, wobei der Tempomat durch Betätigen einer im Bereich des Lenkrades angeordneten Betätigungsvorrichtung aktivierbar ist.

Ein momentan gültiger Grenzwert der Geschwindigkeit (Tempolimit) kann hierbei beispielsweise aus einer Datenbank ermittelt oder aktiv sensiert werden, beispielsweise mit einem optischen Sensor. Dieser ermittelte Grenzwert der Geschwindigkeit wird einem Fahrer über die Anzeigeeinrichtung als Vorschlag angezeigt, wobei der Fahrer diesen Vorschlag mittels der Betätigungseinrichtung, beispielsweise per einmaligem Knopfdruck, annehmen kann. In der Folge regelt der Tempomat die Geschwindigkeit des Kraftfahrzeuges auf dieses Tempolimit und zeigt bei einem aktualisierten Tempolimit erneut einen entsprechenden Vorschlag über die Anzeigeeinrichtung an. Weiterhin kann ein angezeigtes Tempolimit über die Betätigungseinrichtung abgelehnt bzw. verändert werden.

Eine weitere Variante des Verfahrens sieht vor, dass weitere Zustandsgrößen eines Kraftfahrzeuges mittels der Sensoreinrichtung ermittelt werden, wobei bevorzugt als Zustandsgrößen Abstände zwischen einem Kraftfahrzeug und Objekten in einer Umgebung des Kraftfahrzeuges ermittelt werden.

Vorzugsweise werden die automatisch ermittelten Abstände in die Größe einer Abstellfläche umgesetzt. D.h., mit Hilfe der Sensoreinrichtung soll die Größe eines Parkplatzes (Abstellfläche) ermittelt werden, bzw., ob die Größe der Abstellfläche ausreicht, um das Auto darauf abzustellen, d.h., zu parken. Bei einer solchen Abstellfläche kann es sich beispielsweise um eine Parklücke zwischen zwei entlang einer Straße abgestellten Fahrzeugen handeln, wobei die Sensoreinrichtung im Vorbeifahren den Abstand zwischen den beiden Fahrzeugen entlang der Straße ermitteln kann und somit automatisch die Größe der Abstellfläche (Parklücke) ermitteln bzw. abschätzen kann.

Ein bevorzugtes Ausführungsbeispiel des erfindungsgemäßen Verfahrens sieht vor, dass eine freie Abstellfläche durch die Sensoreinrichtung erkannt und vermessen wird, wobei automatisch überprüft wird, ob die Abstellfläche groß genug ist, um das Kraftfahrzeug darauf zu parken. Weiterhin werden dem Fahrer über die Anzeigeeinrichtung die ermittelten Informationen über die sensierte Abstellfläche angezeigt, und zwar insbesondere, ob diese groß genug ist, um das Kraftfahrzeug auf der Abstellfläche abzustellen. Hierbei berücksichtigt die Sensoreinrichtung auch denjenigen Platz, den ein durchschnittlicher Autofahrer zum rangieren benötigt. Weiterhin ist denkbar, dass die Sensoreinrichtung automatisch ausrechnet, wie das Kraftfahrzeug auf die Abstellfläche bewegt werden kann und dies einem Fahrer über die Anzeigeeinrichtung anzeigt.

Hierdurch wird der Komfort des Kraftfahrzeuges auf vorteilhafte Weise verbessert. Weiterhin erlaubt die erfindungsgemäße Ermittelung der Abstände zwischen dem Kraftfahrzeug und Objekten in der Umgebung des Kraftfahrzeuges ein sicheres Einparken, da auf Grund der Kenntnis der Ausmaße der Abstellfläche eine Kollisionsgefahr mit einem benachbarten Objekt vermindert ist.

Ein Gedanke der Erfindung ist hierbei, dass die Sensoreinrichtung auch für andere Funktionen einsetzbar ist. D.h., während einer normalen Geradeausfahrt oberhalb einer bestimmten (vordefinierbaren) Schwellengeschwindigkeit kann die Sensoreinrichtung dazu verwendet werden, den Abstand zu vorausfahrenden oder entgegenkommenden Fahrzeugen bzw. Hindernissen zu sensieren und eine Kollisionswarnungseinrichtung (z.B. optische, akustische und / oder haptische Anzeige) ansteuern, während bei einer langsamen Fahrt mit einer Geschwindigkeit unterhalb der Schwellengeschwindigkeit dieselbe Sensoreinrichtung dazu verwendet werden kann, potentielle Abstellflächen für das Kraftfahrzeug zu ermitteln und zu vermessen.

Weitere Einzelheiten und Vorteile der Erfindung werden bei der nachfolgenden Beschreibung von Ausführungsbeispielen anhand der Figuren deutlich werden.

Es zeigen:
- Figur 1: eine perspektivische Darstellung der Blickrichtungen eines Fahrers bei bekannten Kommunikationsinterfaces und bei einer Variante einer erfindungsgemäßen Lenkradbaugruppe, mit einer in einem Lenkradkranz angeordneten Anzeigeeinrichtung,
- Figur 2: eine Draufsicht auf eine erfindungsgemäße Lenkradbaugruppe der in der Figur 2 und Figur 3 gezeigten Art, mit einem LCD (Anzeigeeinrichtung) im Lenkradkranz,
- Figur 3a-3d: eine Anzeigeeinrichtung (LCD) der in der Figur 2 gezeigten Art, die optische Signale zur Warnung vor einem zu geringem Abstand eines vorausfahrenden Fahrzeuges anzeigt,
- Figur 4a-4c: schematische Darstellungen von möglichen Kollisionen mit einem entgegenkommenden Fahrzeug auf einer benachbarten Spur, mit einem Fahrzeug auf einer kreuzenden Spur und mit einem vorausfahrenden Fahrzeug auf der gleichen Fahrspur,

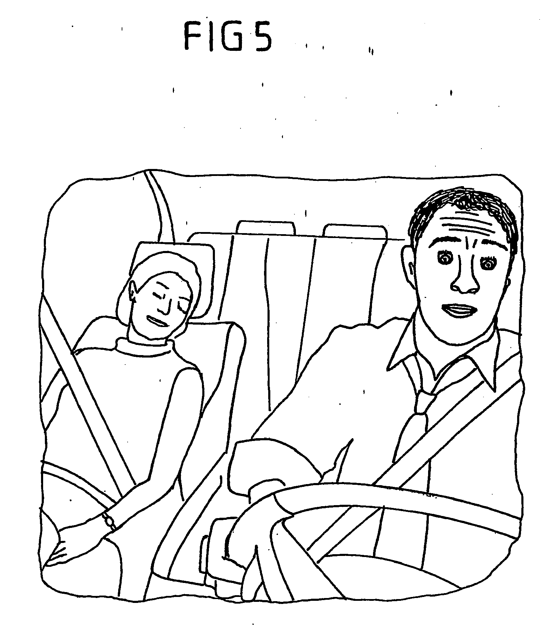

- Figur 5: perspektivische Darstellung eines Fahrers im Cockpit eines Kraftfahrzeuges, wobei die Aufmerksamkeit des Fahrers durch die erfindungsgemäße Lenkradbaugruppe auf die Straße (Geradeausblickrichtung) gelenkt worden ist,
- Figur 6: einen Ausschnitt einer Anzeigeeinrichtung, die ein optischen Signal für eine Kurvengeschwindigkeitswarnung anzeigt,
- Figur 7: einen Ausschnitt einer Anzeigeeinrichtung, die ein optisches Warnsignal zur Warnung vor einem Überfahren eines Stoppschildes anzeigt,
- Figur 8: eine Abwandlung einer Lenkradbaugruppe der in der Figur 2 gezeigten Art,
- Figur 9: eine Abwandlung einer Lenkradbaugruppe der in der Figur 8 gezeigten Art,
- Figur 10: eine schematische Schnittdarstellung eines Lenkrades einer erfindungsgemäßen Lenkradbaugruppe, mit einem Bereich zum Ablenken eines sich entfaltenden Gassackes,
- Figur 11: eine schematische Schnittdarstellung eines Lenkradkranzes des in der Figur 10 gezeigten Lenkrades, und
- Figur 12: eine schematische Schnittdarstellung einer Abwandlung des in der Figur 11 gezeigten Lenkradkranzes.

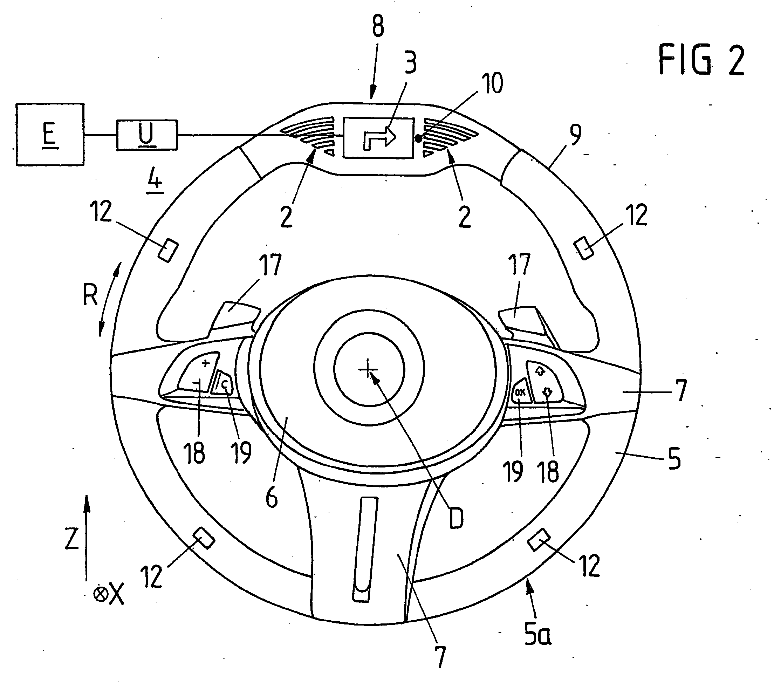

Figur 2 zeigt eine Draufsicht auf eine Lenkradbaugruppe 4 mit einem Lenkrad 5a, das einen Lenkradkranz 5 und einen Nabenkörper 6 aufweist, der über drei Speichen 7 mit dem Lenkradkranz 5 verbunden ist.

Der Nabenkörper 6 ist um eine Lenkachse D drehbar gelagert, die senkrecht auf der Papierebene steht und wird von dem ringförmig ausgebildeten Lenkradkranz 5 quer zur Lenkachse D entlang einer Drehrichtung R des Lenkradkranzes 5 umlaufen. Die drei Speichen 7 sind im Wesentlichen T-förmig angeordnet, wobei - bezogen auf einen Einbauzustand des Lenkrades 5a - in einer Geradeausfahrtstellurig des Lenkradkranzes 5 eine der drei Speichen 7 im Wesentlichen entlang der vertikalen Fahrzeugachse z verläuft (das Lenkrad 5a kann zur vertikalen Fahrzeugachse z geneigt sein, bzw. eine verstellbare Neigung aufweisen), während die beiden anderen Speichen 7 horizontal in entgegen gesetzter Richtung vom Nabenkörper 6 abstehen und den Lenkradkranz 5, bezogen auf seine Geradeausfahrtstellung, in eine oberhalb der Lenkachse D verlaufende Hälfte und eine unterhalb der Lenkachse D verlaufende Hälfte unterteilen.

Die Lenkradbaugruppe 4 weist eine Anzeigeeinrichtung 8 in Form einer optischen Anzeige zum Anzeigen von Fahrinformationen auf. Eine erstes Anzeigeelement der Anzeigeeinrichtung 8 ist als ein rechteckförmiger Bildschirm 3 ausgebildet, und zwar als ein LCD (Flüssigkristallanzeige), der in der Figur 2 gezeigten Geradeausfahrtstellung des Lenkradkranzes 5 in der oberen Hälfte des Lenkradkranzes 5 angeordnet ist, und zwar im Wesentlichen derart, dass er bezogen auf die Geradeausfahrtstellung des Lenkradkranzes am höchsten Punkt (bezogen auf die vertikale Fahrzeugachse z) des Lenkradkranzes 5 angeordnet ist, d.h., in 12 Uhr-Stellung. Hierbei ist der Bildschirm 3 in eine einem Fahrer zugewandte Oberseite des Lenkradkranzes 5 eingelassen, so dass er dem Fahrer entlang der Fahrzeuglängsachse x gegenüberliegt und diesem zugewandt ist.

Der Bildschirm 3 ist entlang des Lenkradkranzes 5, d.h., entlang der Drehrichtung R des Lenkradkranzes 5, zwischen zwei weiteren Anzeigeelemente der Anzeigeeinrichtung 8 angeordnet, die jeweils aus fünf LED-Feldern 2 gebildet sind. Die LED-Felder 2 sind entlang der Drehrichtung R längs erstreckt (zeilenförmig) ausgebildet, wobei in der Geradeausfahrtstellung des Lenkradkranzes 5 die jeweils fünf LED-Felder 2 entlang der vertikalen Fahrzeugachse z übereinander angeordnet sind und zu einem äußeren umlaufenden Rand 9 des Lenkradkranzes 5 hin (entlang der Drehrichtung R) breiter werden, d.h., die Längserstreckung der LED-Felder 2 entlang der Drehrichtung R wächst mit zunehmenden radialen Abstand zum Nabenkörper 6 des Lenkrades 5a.

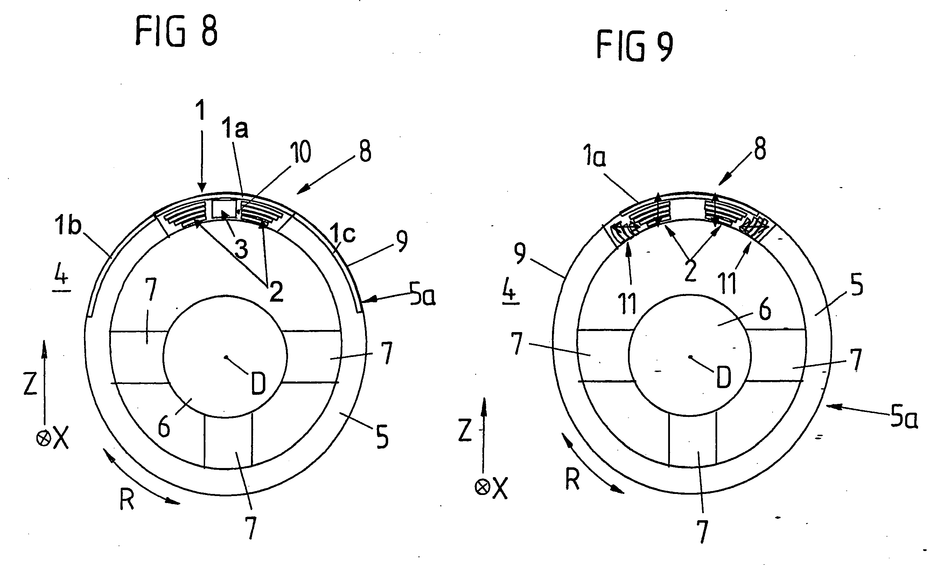

Figur 8 zeigt eine Draufsicht einer Abwandlung des in der Figur 2 gezeigten Lenkrades 5 bei dem sich im Unterschied zur Figur 2 ein weiteres bogenförmig ausgebildetes LED-Feld 1 entlang eines äußersten (entlang einer senkrecht auf der Drehachse D stehenden radialen Richtung) umlaufenden Randes 9 des Lenkradkranzes 5 erstreckt, und zwar im Wesentlichen über die gesamte obere Hälfte des Lenkradkranzes 5. Das LED-Feld 1 ist entlang der Drehrichtung R in drei etwa gleich lange Segmente 1b, 1a und 1c unterteilt, wobei das mittlere Segment 1a entlang der vertikalen Fahrzeugachse z (bei Geradausfahrtstellung des Lenkradkranzes 5) oberhalb des Bildschirmes 3 und der LED-Felder 2 (jeweils vier zu beiden Seiten des Bildschirmes 3 entlang der Drehrichtung R) angeordnet ist. Jedes dieser Segmente 1a, 1b und 1c ist zur Anzeige von Fahrinformationen separat ansteuerbar.

Figur 9 zeigt eine weitere Abwandlung der in der Figur 8 gezeigten Lenkradbaugruppe 4, bei der im Unterschied zur Figur 8 kein Bildschirm 3 vorgesehen ist (dieser kann natürlich auch hier verwendet werden) und das weitere LED-Feld 1 lediglich über das mittlere Segment 1a verfügt. Weiterhin ist keine Kamera 10 vorgesehen, kann aber auch hier eingesetzt werden. Zusätzlich sind an einander abgewandten Seiten der LED-Felder 2 jeweils vier zusätzliche LED-Felder 11 angeordnet, die quer zur Drehrichtung R auf der Oberseite des Lenkradkranzes 5 angeordnet sind. Diese zusätzlichen LED-Felder 11 können separat angesteuert werden und dienen insbesondere zum Anzeigen von Warnsignalen, die auf ein Verlassen der Fahrspur (quer zur Fahrtrichtung) hinweisen. Wird beispielsweise die Fahrspur über die rechte Markierung (in Fahrtrichtung) der Fahrspur verlassen, wird dies durch einen Sensor festgestellt und an eine Steuerelektronik übermittelt, die entsprechend eines der zusätzlichen LED-Felder 11 auf der rechten Seite (bezogen auf die Fahrtrichtung) des Lenkradkranzes 5 aktiviert. Je nachdem, wie weit das Fahrzeug die Spur verlässt, können weitere zusätzliche LED-Felder 11 auf der rechten Seite des Lenkradkranzes 5 aktiviert werden.

Ein Fahrer gilt als aufmerksam oder als in einem Aufmerksamkeitszustand befindlich, wenn er den umgebenden Verkehr und die Umgebung beobachtet. Zum Erfassen eines Aufmerksamkeitszustandes des Fahrers ist gemäß Figur 2 bzw. Figur 8 eine Erfassungseinrichtung 10 in Form einer Kamera entlang der Drehrichtung R zwischen dem Bildschirm 3 und den übereinander angeordneten LED-Feldern 2 angeordnet, die ihrerseits bezogen auf die Geradeausfahrtrichtung (aus Sicht eines Fahrers) auf der rechten Seite des Bildschirmes 3 angeordnet sind.

Ein wichtiger Indikator für den Aufmerksamkeitszustand des Fahrers sind z.B. seine Blickrichtung und seine Augenstellung. Der Aufmerksamkeitszustand kann hierbei beispielsweise anhand der Abweichung der Blickrichtung von der Geradeausblickrichtung (Beobachtung der vorausfahrenden Verkehrsteilnehmer) und / oder der Augenstellung (offen, geschlossen) klassifiziert werden. Sowohl die Blickrichtung als auch die Augenstellung können durch die Kamera 10 erfasst werden und daher zur Steuerung der vorstehend beschriebenen Anzeigeelemente der Anzeigeeinrichtung 8 verwendet werden.

Hierbei ist vorgesehen, dass die Anzeigeelemente der Anzeigeeinrichtung 8 zur Warnung eines Fahrers vor seiner mangelnden Aufmerksamkeit (z.B. wenn die Augen des Fahrers länger als eine vordefinierbare Zeitspanne geschlossen sind und / oder die Blickrichtung des Fahrers länger als eine bestimmte Zeitspanne von einer Geradeausblickrichtung abweicht) aktiviert werden.

Zur Steigerung der visuellen Wahrnehmbarkeit mittels der Anzeigeelemente erzeugter Warnsignale ist insbesondere vorgesehen, dass die LED-Felder 2 oder das weitere LED-Feld 1 zum Aufleuchten in verschiedenen Frequenzen und / oder Intensitäten, d.h., Helligkeitsstufen vorgesehen und eingerichtet sind. Alternativ oder zusätzlich können zur Warnung des Fahrers mittels des Bildschirmes 3 Texte und / oder Symbole angezeigt werden.

Weiterhin können zum Warnen des Fahrers haptische Signale dienen, die gemäß Figur 2 mittels im Lenkradkranz 5 angeordneter Vibratoren 12 erzeugbar sind. Damit die mittels der Vibratoren 12 erzeugten haptischen Signale in jeder erdenklichen Griffposition für einen Fahrer spürbar sind, sind sie entlang der Drehrichtung R am Lenkradkranz 5 verteilt angeordnet oder erstrecken sich alternativ längs der Drehrichtung R über einen gesamten Umfang des Lenkradkranzes 5. Derartige Vibratoren 12 können auch in einem dem Fahrer zugeordneten Sitz eines Kraftfahrzeuges verwendet werden. Ein Einsatz haptischer Anzeigen in Form im Lenkradkranz 5 angeordneter Vibratoren 12 ist insbesondere zum Warnen eines Fahrers vor dem seitlichen Verlassen einer Fahrspur vorgesehen. Weiterhin können zum Warnen des Fahrers natürlich auch akustische Signale dienen.

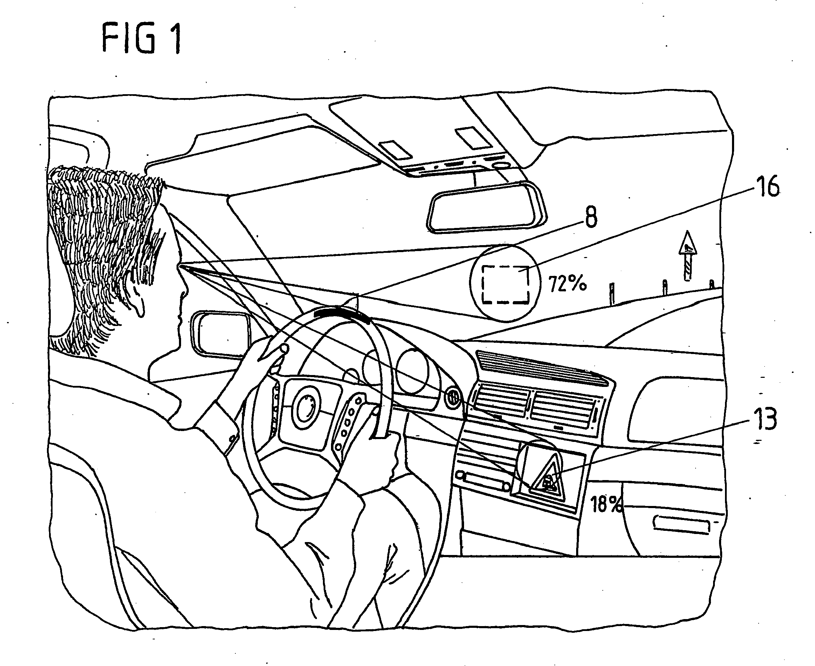

Die Anzeigeeinrichtung 8 der Lenkradbaugruppe 4 ist auf Grund ihrer Anordnung am Lenkradkranz 5 stets im Gesichtsfeld eines Fahrers präsent. Es ist bekannt, dass bei Verwendung eines herkömmlichen Navigationssystems mit einem bekannten, an der Mittelkonsole unterhalb des Armaturenbrettes angeordneten Kommunikationsinterface 13 gemäß Figur 1, lediglich etwa 18% der Fahrzeit das Kommunikationsinterface 13 (Kombination aus optischer Anzeige und Bedieneinheit) betrachtet wird, während ein durchschnittlicher Fahrer etwa 72% der Fahrtzeit in die Geradeausfahrtrichtung blickt (Geradeausblickrichtung), so dass die Anzeigeeinrichtung 8 der Lenkradbaugruppe 4 rund 72% der Fahrzeit im Gesichtsfeld eines Fahrers liegt. Hierdurch lässt sich ein Fahrer in gefährlichen Situationen besser über die Anzeigeeinrichtung 8 warnen und informieren, wobei gleichzeitig die Aufmerksamkeit weniger vom umgebenden Verkehrsgeschehen abgezogen wird, da die Anzeigeeinrichtung 8 zentraler im Gesichtfeld gelagert ist als ein bekanntes zentrales Kommunikationsinterface 13. Im Ergebnis können Unfälle durch rechtzeitiges Warnen eines Fahrers vermieden bzw. effektiver vermindert werden.

Weiterhin weist die Anzeigeeinrichtung 8 der Lenkradbaugruppe 4 gegenüber einem bekannten HUD 16 (head up display, d.h., auf die Frontscheibe eines Kraftfahrzeuges projizierte Anzeige) gemäß Figur 1 den Vorteil auf, dass sie weniger stark durch Umwelteinflüsse (z.B. direkte Sonneneinstrahlung entgegen der Geradeausfahrtrichtung) beeinträchtigt wird.

Weiterhin weist die Lenkradbaugruppe 4 gemäß Figur 2 Betätigungseinrichtungen auf, die in den Figuren 8 und 9 nicht gezeigt sind. Hierbei handelt' es sich um zwei Betätigungshebel 17, die jeweils an den horizontal verlaufenden Speichen 7 der Lenkradbaugruppe 4 derart ausgebildet und angeordnet sind, dass sie durch einen Fahrer, z.B. per Daumendruck, entlang der Fahrzeuglängsachse x betätigbar sind. Mittels dieser Betätigungshebel 17 kann beispielsweise ein Fahrtrichtungsanzeiger eines Kraftfahrzeuges aktiviert bzw. deaktiviert werden. Weiterhin weist jede der beiden horizontal verlaufenden Speichen 7 (horizontal bezogen auf die Geradeausfahrtstellung des Lenkradkranzes 5) jeweils ein wippenartiges Betätigungselement 18 auf, dass an zwei einander gegenüberliegenden Enden betätigbar ist, und zwar durch ein Drücken entlang der Fahrzeuglängsachse x. Hiermit kann in einem auf dem Bildschirm 3 angezeigten Menü eine Auswahl getroffen werden, indem beispielsweise ein Auswahlbereich (cursor) mit einem der beiden Betätigungselemente 18 nach oben bzw. nach unten (entlang der vertikalen Fahrzeugachse z bei Geradeausfahrtstellung des Lenkradkranzes 5) bewegbar wird (scrollen), während mit dem jeweils anderen Betätigungselement 18 eine Bewegung des Auswahlfeldes nach links bzw. rechts erfolgen kann (von einem Fahrer aus gesehen bei Geradeausfahrtstellung des Lenkradkranzes 5).

Weiterhin befindet sich auf jeder der beiden horizontalen Speichen 7 ein einfacher Druckschalter 19, wobei der eine der beiden Druckschalter 19 vorzugsweise dazu verwendet wird, einen bestimmte Auswahl zu bestätigen, während der andere dazu dient, eine durch die Anzeigeeinrichtung 8 angezeigte Auswahl oder Option abzulehnen.

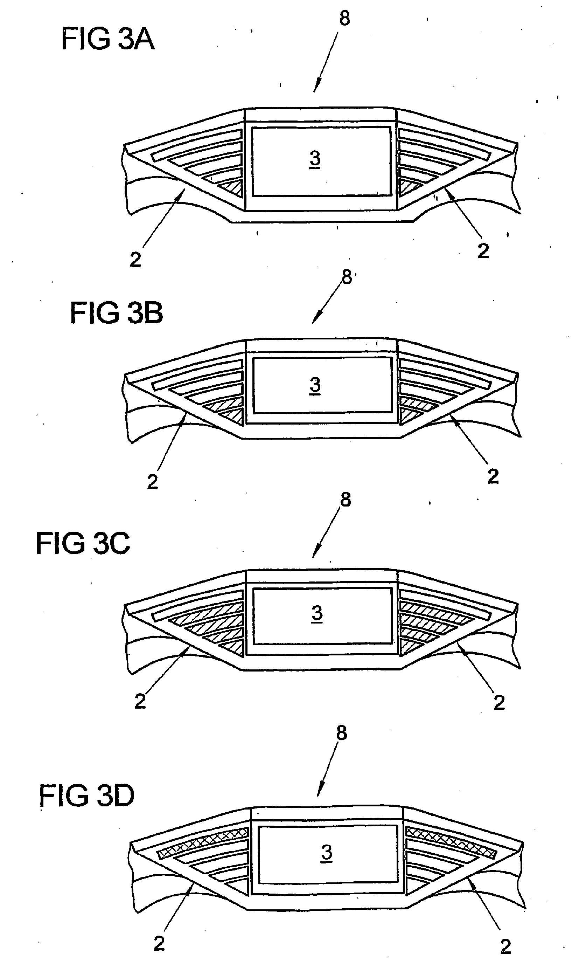

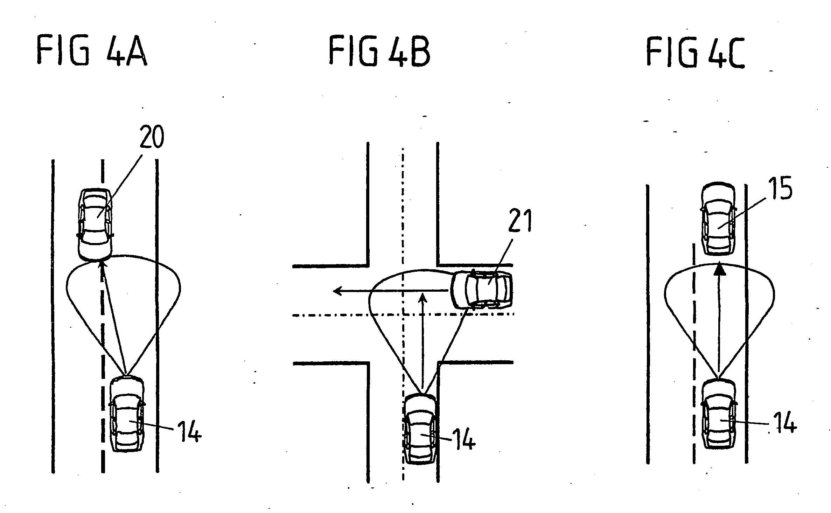

Die vertikal übereinander angeordneten LED-Felder 2 der Anzeigeeinrichtung 8 gemäß den Figuren 2, 8 und 9 der Lenkradbaugruppe 4 werden vorzugsweise für Kollisionswarnungen bzw. Abstandssignale verwendet. Hierbei werden zumindest drei Fälle voneinander unterschieden. Zunächst kann bei' einem vorausfahrenden Fahrzeug 15 auf derselben Fahrspur gemäß der Figur 4c der Abstand zu diesem Fahrzeug 15 mittels der LED-Felder 2 gemäß Figur 3a bis 3d angezeigt werden, wobei beim Unterschreiten eines bestimmten Abstandes zunächst die näher zum Nabenkörper 6 gelegenen LED-Felder 2 zu beiden Seiten des Bildschirms 3 aktiviert werden (Figur 3a) und dann sukzessive beim Unterschreiten weiterer (jeweils kleinerer) Abstände die entlang der vertikalen Fahrzeugachse z - bezogen auf eine Geradeausfahrtstellung des Lenkrades - darüber angeordneten LED-Felder 2 (Figur 3b bis 3c). Bei akuter Kollisionsgefahr werden die - bezogen auf eine Geradeausfahrtstellung des Lenkradkranzes 5 - entlang der vertikalen Fahrzeugachse z obersten LED-Felder 2 (Figur 3d) bzw. bei einem Lenkrad 5 der in der Figur 8 oder 9 gezeigten Art bevorzugt das weitere LED-Feld 1 am äußeren umlaufen Rand 9 des Lenkradkranzes 5 aktiviert. Vorzugsweise ist das oberste LED-Feld 2 bzw. das weitere LED-Feld 1 dazu ausgebildet, zur vorstehend beschriebenen Warnung eines Fahrers ein rotes Licht auszusenden.

Eine derartige Kollisionswarnung wird auch bei einem entgegenkommenden Fahrzeug 20 angezeigt, das gemäß der Figur 4a von einer benachbarten Spur auf diejenige Fahrspur wechselt, die das Kraftfahrzeug 14 mit der Lenkradbaugruppe 4 befährt. Weiterhin werden solche Warnsignale, auch bei einer drohenden Seitenkollision mit einem die Fahrspur des Kraftfahrzeuges 14 kreuzenden Fahrzeug 21 gemäß der Figur 4b aktiviert.

über den Bildschirm 3 können auch Kurvengeschwindigkeitswarnungen angezeigt werden. Hierbei bestimmt eine Sensorik die Krümmung einer vorausliegenden Kurve und errechnet daraus eine Maximalgeschwindigkeit, mit der die Kurve noch gefahrlos durchfahren werden kann. Liegt die Geschwindigkeit des Kraftfahrzeuges darüber, wird die Kurvengeschwindigkeitswarnung, beispielsweise in Form eines Piktogramms gemäß Figur 9, aktiviert.

Weiterhin können über den Bildschirm 3 der Lenkradbaugruppe 4 durch ein Navigationssystem ermittelte Informationen, z.B. eine Fahrtroute, dargestellt werden. Insbesondere vor einem Abbiegen kann über den Bildschirm 3, z.B. durch Anzeigen eines in die künftige Fahrtrichtung weisenden Pfeiles gemäß Figur 2, eine Fahrtrichtungsänderung angezeigt werden.

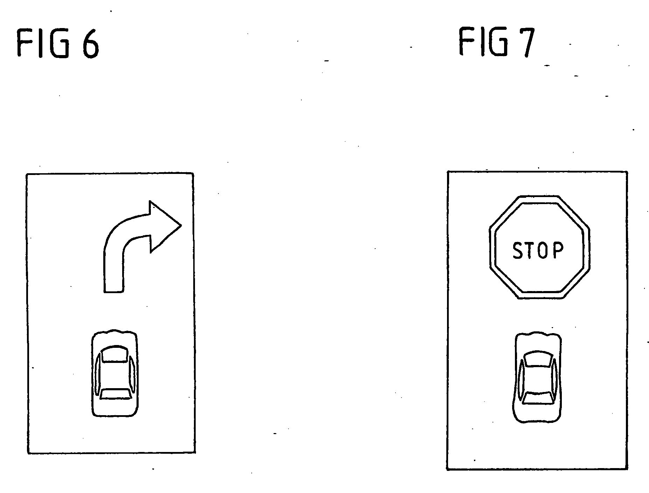

Weiterhin ist vorgesehen, dass eine Sensorik, beispielsweise eine Kamera, Stoppschilder in einer Kraftfahrzeugsumgebung erkennt. Diese werden auf dem Bildschirm 3 als ein Piktogramm gemäß Figur 7 angezeigt, wobei gegebenenfalls eine Bremswarnung, beispielsweise über das weitere LED-Feld 1 oder eines der LED-Felder 2 angezeigt wird. Vorzugsweise ist das weitere LED-Feld 1 bzw. eines der LED-Felder 2 dazu ausgebildet zu diesem Zweck ein rotes Licht auszusenden.

Die Anzeigeeinrichtung 8, insbesondere der Bildschirm 3, können natürlich auch dazu dienen, einen Reifendruck eines Kraftfahrzeuges sowie den Benzinstand eines Tanks eines Kraftfahrzeuges anzuzeigen und / oder bei einem mangelndem Reifendruck bzw. einem Benzinmangel eine entsprechende Warnung bzw. einen Hinweis anzuzeigen. Mit Vorteil kann ein Fahrer über den Bildschirm 3 auch daran erinnert werden sich anzuschnallen.

Besonders vorteilhaft kann gemäß Figur 2 und Figur 8 über den Bildschirm 3 ein z.B. durch eine Übertragungseinheit U (in der Figur 8 nicht gezeigt) an die Lenkradbaugruppe 4 übertragener Grenzwert der Geschwindigkeit eines Kraftfahrzeuges (Tempolimit) dargestellt werden, der mittels einer dafür vorgesehenen Sensoreinrichtung E ermittelbar ist, die im oder am Kraftfahrzeug angeordnet ist. Die Sensoreinrichtung E kann hierbei den Grenzwert der Geschwindigkeit mittels optischer Sensoren von entlang einer Fahrtroute angeordneten Hinweisschildern ablesen. Alternativ oder zusätzlich ist die Sensoreinrichtung E dazu ausgebildet, den aktuellen Grenzwert der Geschwindigkeit aus einer GPS-Datenbank, in der derartige Informationen gespeichert sind, auslesen.

Ein aktuell durch die Sensoreinrichtung E ermittelter Grenzwert der Geschwindigkeit wird einem Fahrer zunächst über den Bildschirm 3 angezeigt. Der Fahrer kann sich nun entscheiden, ob er den vorgeschlagenen Grenzwert der Geschwindigkeit annimmt und somit an einen Tempomat übergibt, der in der Folge die Geschwindigkeit des Fahrzeuges auf den angenommen Grenzwert der Geschwindigkeit begrenzt bzw. regelt oder ob er den aktuell ermittelten Grenzwert der Geschwindigkeit ablehnt.

Zur Annahme bzw. zum Ablehnen des Vorschlages dient die mit dem Tempomat und der Anzeigeeinrichtung gekoppelte Betätigungseinrichtung 17, 18, 19 der Lenkradbaugruppe 4, wobei bevorzugt durch einmaliges Betätigen der Betätigungseinrichtung 17, 18, 19, beispielsweise durch Drücken eines der beiden Druckschalter 19, der ermittelte Grenzwert der Geschwindigkeit angenommen wird.

Der Fahrer hat auch die Möglichkeit, den ihm über den Bildschirm vorgeschlagenen Grenzwert der Geschwindigkeit mittels der Betätigungseinrichtung zu verändern, d.h., zu erhöhen oder herabzusetzen. Hierzu können beispielsweise die Betätigungshebel 17 und / oder die Betätigungselemente 18 eingerichtet und vorgesehen sein.

Weiterhin kann mittels der Betätigungseinrichtung 17, 18, 19 ein vom Tempomat vorgesehener Toleranzbereich des Grenzwertes der Geschwindigkeit betragsmäßig eingestellt und aktiviert werden. Der Toleranzbereich ist derjenige Geschwindigkeitsbereich, um den die Geschwindigkeit des Kraftfahrzeuges von dem ermittelten Grenzwert der Geschwindigkeit abweichen soll. So kann der Fahrer z.B. einstellen, dass der von außen an die Anzeigeeinrichtung übermittelte Grenzwert der Geschwindigkeit immer um 10% überschritten werden soll.

Weiterhin ist der Bildschirm 3 zur Anzeige der momentanen Umdrehungszahl des Motors und / oder des verwendeten Ganges des Getriebes eines Kraftfahrzeuges ausgebildet. Bei diesem Ausführungsbeispiel ist die Sensoreinrichtung E dazu eingerichtet und vorgesehen die momentane Umdrehungszahl und den aktuellen Gang des Kraftfahrzeuges zu ermitteln.

Eine Funktionseinheit in Form einer Auswerteelektronik errechnet aus der ermittelten Drehzahl in Abhängigkeit des momentanen Ganges einen Vorschlag für einen zu verwendenden Gang, der über den Bildschirm 3 angezeigt und beispielsweise per Knopfdruck (Druckschalter 19) durch einen Fahrer angenommen bzw. abgelehnt werden kann. Der Vorschlag kann von weiteren Parametern abhängen, die über die Betätigungseinrichtung 17,18,19 der Lenkradbaugruppe 4 einstellbar sein können (z.B. gewünschter Fahrstil wie sportlich, sparsam etc.)

Weiterhin kann der Bildschirm 3 auch vorteilhaft dazu verwendet werden, einem Fahrer anzuzeigen, mit welchem Manöver er in eine ausgewählte Parklücke (Abstellfläche) einparken kann. Diese wird hierzu, beispielsweise im Vorbeifahren, von der Sensoreinrichtung E vermessen und klassifiziert, d.h., es wird automatisch festgestellt, ob ein Einparken von der Größe der Abstellfläche her möglich ist.

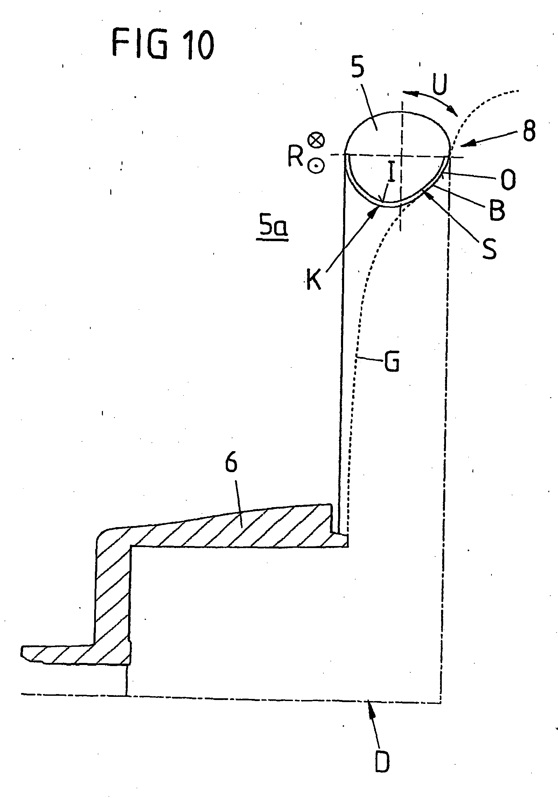

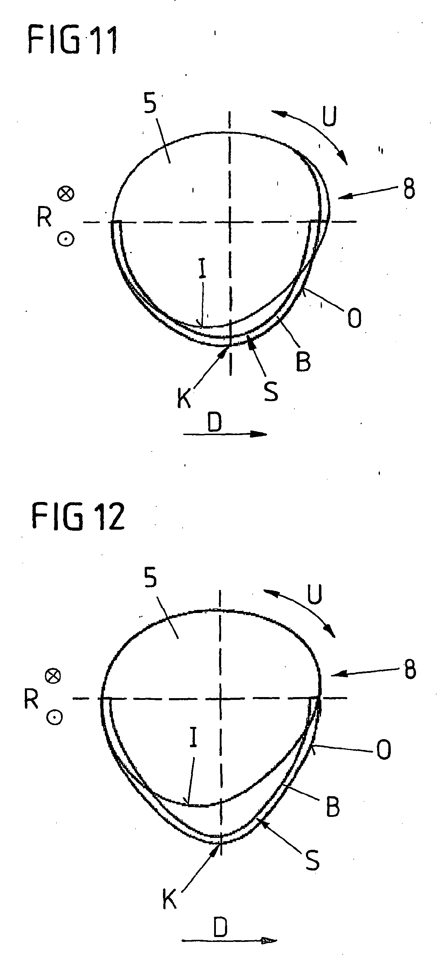

Figur 10 zeigt im Zusammenhang mit Figur 11 und Figur 12 eine ausschnitthafte schematische Schnittdarstellung eines Lenkrades 5a einer Lenkradbaugruppe 4 der in den Figuren 2, 8 und 9 gezeigten Art, mit einem Lenkradkranz 5 des Lenkrades 5a, der den Nabenkörper 6 quer zur Lenkachse D ringförmig umläuft. Die Lenkachse D liegt jeweils in der Schnittebene der Figuren 10 bis 12.

Der Nabenkörper 6 bildet eine Aufnahme für ein Gassackmodul, das einen Gassack G aufweist (ein Teil des Gassackes G ist durch eine gestrichelte Linie in der Figur 10 angedeutet), der in einer mit der Lenkachse D zusammenfallenden Hauptentfaltungsrichtung zum Schutz eines Fahrers entfaltbar ist. Hierzu wird der Gassack G mittels eines nicht gezeigten Gasgenerators des Gassackmoduls aufgeblasen, wobei der Gassack G eine nicht gezeigte Abdeckkappe des Nabenkörpers 6 durchstößt bzw. absprengt und sich entlang der Hauptentfaltungsrichtung zum Schutz eines Fahrers, d.h., zwischen dem Lenkrad 5a und dem Fahrer, entfaltet. Der Gassack G kann im aufgeblasenen Zustand symmetrisch zur Lenkachse D bzw. zur Hauptentfaltungsrichtung ausgebildet sein und weist dabei sowohl eine räumliche Ausdehnung entlang der Lenkachse D als auch quer zur Lenkachse D auf. Durch ein Befüllen mit durch den Gasgenerator bereitgestelltem Gas wird der Gassack G zur Entfaltung gebracht, wobei er sich quer zur Lenkachse D ausdehnt und gegen einen Bereich B des Lenkradkranzes 5 stoßen kann, der der Lenkachse D quer zur Lenkradachse D gegenüberliegt. Dies kann beispielsweise geschehen, wenn sich der Gassack G nicht frei entfalten kann, also z.B. in Situationen, in denen sich der Fahrer entlang der Lenkachse D zu dicht vor dem Lenkrad 5 befindet (oop-Situation).

Um eine Um- bzw. Ablenkung eines auf den Bereich B auftreffenden Gassackes G sicherzustellen, und zwar derart, dass der Gassack G den Lenkradkranz 5, insbesondere die am Lenkradkranz 5 bzw. dem Bereich B angeordnete Anzeigeeinrichtung 8, nicht beschädigt, weist der Bereich B eine Ablenkschräge auf, d.h., er ist bezüglich der Lenkachse D geneigt. Diese Neigung ist derart ausgebildet, dass der Gassack G unter einem Einfallswinkel auf den Bereich B auftrifft, der einem Ausfallswinkel, unter dem er durch den Bereich B abgelenkt wird, betragsmäßig im Wesentlichen gleicht. Damit dies über einen möglichst großen Bereich entlang einer den Lenkradkranz 5 quer zur Drehrichtung R ringförmig umlaufenden Umfangsrichtung U möglich ist, weist der Bereich B zusätzlich eine konvexe Krümmung auf.

Zusätzlich weist der Bereich B eine dem Nabenkörper 6 und gegebenenfalls einem Fahrer zugewandte Oberfläche O auf, die derart beschaffen ist, dass der Gassack G leicht an ihr abgleiten kann (geringe Reibung). Weiterhin kann der Bereich B auf eine Umgebung der Anzeigeeinrichtung 8 beschränkt sein und sich in Drehrichtung R und / oder in Umfangsrichtung U entlang der Anzeigeeinrichtung 8 erstrecken. Er kann aber auch den Lenkradkranz 5 bzw. die Lenkachse D entlang der Drehrichtung R ringförmig umlaufen.

Der wie vorstehend beschrieben ausgeformte Bereich B des Lenkradkranzes 5 kann an einem oder mehreren Schalenelementen S ausgebildet sein, die an einer dem Nabenkörper 6 zugewandten Innenseite I des Lenkradkranzes 5 angeordnet sind.

In einer Schnittebene, in der die Lenkachse D liegt, weisen diese Schalenelemente S eine Kontur auf, die im Bereich der Anzeigeeinrichtung 8 von den Konturen zur Anzeigeeinrichtung 8 entlang der Drehrichtung R beabstandeter Abschnitte des Lenkradkranzes 5 abweichen. Es ist aber auch möglich, dass die Konturen im Bereich der Anzeigeeinrichtung 8 mit den übrigen Konturen der Lenkradkranzabschnitte, die zur Anzeigeeinrichtung 8 entlang der Drehrichtung R beabstandet sind, im Wesentlichen identisch übereinstimmen. Alternativ zu den Schalenelementen S kann an dem Lenkradkranz 5 entlang der Anzeigeeinrichtung 8 auch eine Umschäumung des Lenkradkranzes 5 vorgesehen sein, die einen entsprechend ausgebildeten Bereich B zum Umlenken des Gassackes G aufweist.

Das in der Figur 11 gezeigte Schalenelement S weist in dem dem Nabenkörper 6 sowie einem Fahrer zugewandten Bereich B des Schalenelementes S eine konvexe Wölbung auf, die stärker gekrümmt ist als ein dem Bereich B zugewandter und gegenüberliegender Bereich des Lenkradkranzes 5, wobei im Gegensatz zur Figur 12 das im Querschnitt u-förmige Schalenelement S gemäß der Figur 11 im Bereich B eine stärkere Krümmung aufweist als in einem dem Bereich B entlang der Lenkachse D gegenüberliegenden Bereich des Schalenelementes S. Hierdurch besitzt das in der Figur 11 gezeigte Schalenelement S entlang der Lenkachse D eine geringere maximale Breite als der Lenkradkranz 5, so dass dieser entlang der Lenkachse D über das Schalenelement S hinausragt.

Die in der Figur 12 gezeigte Abwandlung des Schalenelementes S ist ebenfalls im Querschnitt u-förmig ausgebildet, d.h., konvex gekrümmt und entlang einer quer zur Lenkachse D verlaufenden Achse symmetrisch ausgebildet, wobei die maximale Breite dieses Schalenelementes S mit der des Lenkradkranzes 5 entlang der Lenkachse D betragsmäßig übereinstimmt. An den freien Enden des Schalenelementes S ist eine äußere dem Lenkradkranz 5 abgewandte Oberfläche des Schalenelementes S bündig in eine äußere (nach außen weisende) Oberfläche des Lenkradkranzes 5 eingepasst und verläuft tangential zu dieser, so dass ein glatter Übergang zwischen dem Schalenelement S und dem Lenkradkranz 5 sichergestellt ist. Dies ist vorteilhaft, da hierdurch von vorneherein Kanten vermieden werden, die den Gassack G beim Auftreffen auf den Bereich B beschädigen könnten.

Entscheidend ist, dass beide Ausführungsformen des Schalenelementes S eine Wölbung derart aufweisen, dass der bezüglich der Lenkachse D geneigte (und quer zur Lenkachse D gekrümmte) Bereich B ausgebildet wird, der ein Ablenken bzw. Umlenken des sich entfaltenden Gassackes G sicherstellt. Es ist vorteilhaft, wenn die u-förmige Querschnittskontur der Schalenelemente S gemäß der Figur 11 bzw. 12 eine verrundete, im Wesentlichen auf den Nabenkörper 6 weisenden Spitze K aufweist, d.h., einen konvex gekrümmten Bereich aufweist, der dem Nabenkörper 6 zugewandt ist und die größte Krümmung der Querschnittskontur aufweist (die u-förmige Querschnittkontur des Schalenelementes S kann bspw. eine Halbellipse sein), wobei der Bereich B des Schalenelementes S entlang der Lenkachse D zwischen dieser Spitze K und einem Fahrer angeordnet ist. Hierdurch kann der sich entfaltende Gassack G vorteilhaft entlang der Lenkachse D durch den Bereich B abgelenkt werden.

Weiterhin können das oder die Schalenelemente S die Anzeigeinrichtung 8 teilweise oder vollständig überdecken und bei einer optischen Anzeigeeinrichtung 8 transparent ausgebildet sein. Alternativ hierzu können die Schalenelemente S entlang des Lenkradkranzes 5 rechts und links von einer am Lenkradkranz 5 angeordneten Anzeigeinrichtung 8 angeordnet sein, d.h., diese entlang des Lenkradkranzes 5 umgeben. Hierdurch wird die Anzeigeeinrichtung 8 geschützt, da die Schalenelemente S gemäß Figur 11 und 12 im Bereich B vom Lenkradkranz 5 abstehen und somit über eine in dem Lenkradkranz 5 angeordnete bzw. dort eingelassene Anzeigeeinrichtung 8 hinausragen, d.h., zwischen der Anzeigeeinrichtung 8 und einem sich entfaltenden Gassack G angeordnet sind. Diese Schutzfunktion wird durch die Neigung des Bereiches B in Bezug auf die Lenkachse D (d.h., der Bereich B bildet eine Ablenkschräge) und die Krümmung des Bereichs B, die ein Um- bzw. Ablenken eines sich entfaltenden Gassackes G gewährleistet, unterstützt.

## Patentansprüche

1. Lenkradbaugruppe für ein Kraftfahrzeug, mit:
- einem Lenkrad (5a), und
- einer am Lenkrad (5a) angeordneten Anzeigeeinrichtung (8), die mit einer an dem Kraftfahrzeug anzuordnenden Sensoreinrichtung (E) zum Ermitteln mindestens einer Zustandsgröße eines Kraftfahrzeuges in Wirkverbindung steht und die zum Anzeigen der mittels der Sensoreinrichtung (E) ermittelten Zustandsgröße vorgesehen ist,
wobei mit der Sensoreinrichtung (E) eine Funktionseinheit des Kraftfahrzeuges zum Weiterleiten oder Umwandeln von Energie und / oder Informationen gekoppelt ist und die Funktionseinheit dazu eingerichtet und vorgesehen ist, einem Fahrer über die Anzeigeeinrichtung (8) einen Vorschlag für eine Einstellung einer Zustandsgröße des Kraftfahrzeuges anzuzeigen, und wobei der Funktionseinheit eine Betätigungseinrichtung (17, 18, 19) des Kraftfahrzeuges zugeordnet ist, mit der gemäß des Vorschlages der Funktionseinheit die Zustandsgröße einstellbar ist.
**dadurch gekennzeichnet, dass**
- die Betätigungseinrichtung (17, 18, 19) am Lenkrad (5a) angeordnet ist, und
- die Betätigungseinrichtung (17, 18, 19) zur Annahme und Ablehnung des Vorschlages durch Einwirken auf die Betätigungseinrichtung (17, 18, 19) ausgebildet und vorgesehen ist.

2. Lenkradbaugruppe nach Anspruch 1 oder 2, **dadurch gekennzeichnet, dass** die Einstellung der Zustandsgröße eine Bestätigung oder eine Änderung der Zustandsgröße umfasst.

3. Lenkradbaugruppe nach einem der vorangegangenen Ansprüche, **dadurch gekennzeichnet, dass** die Betätigungseinrichtung (17, 18, 19) zur Annahme oder Ablehnung des Vorschlages per einmaliger Betätigung der Betätigungseinrichtung (17, 18, 19) ausgebildet und vorgesehen ist.

4. Lenkradbaugruppe nach einem der vorangegangenen Ansprüche, **dadurch gekennzeichnet, dass** der Vorschlag mittels der Betätigungseinrichtung (17, 18, 19) veränderbar ist.

5. Lenkradbaugruppe nach einem der vorangegangenen Ansprüche, **dadurch gekennzeichnet, dass** die Funktionseinheit einen vordefinierbaren Zeitraum vorsieht, innerhalb dessen die Betätigungseinrichtung (17, 18, 19) zur wirksamen Annahme des Vorschlages betätigt werden muss.

6. Lenkradbaugruppe nach einem der vorangegangenen Ansprüche, **dadurch gekennzeichnet, dass** die Funktionseinheit als ein Tempomat ausgebildet ist.

7. Lenkradbaugruppe nach einem der vorangegangenen Ansprüche, **dadurch gekennzeichnet, dass** die Zustandsgröße eine Geschwindigkeit eines Kraftfahrzeuges ist.

8. Lenkradbaugruppe nach einem der vorangegangenen Ansprüche, **dadurch gekennzeichnet, dass** der Vorschlag einen durch die Sensoreinrichtung (E) ermittelten Grenzwert der Geschwindigkeit zur Annahme stellt, wobei die Annahme des Vorschlages die Begrenzung der Geschwindigkeit des Kraftfahrzeuges auf den Grenzwert der Geschwindigkeit durch den Tempomat bewirkt.

9. Lenkradbaugruppe nach einem der Ansprüche 1 bis 6, **dadurch gekennzeichnet, dass** die Zustandsgröße ein Abstand zu einem vorausfahrenden Fahrzeug ist.

10. Lenkradbaugruppe nach Anspruch 9, **dadurch gekennzeichnet, dass** der Vorschlag einen Abstand zu einem vorausfahrenden Fahrzeug zur Annahme stellt, wobei die Annahme des Vorschlages die Regelung der Geschwindigkeit des Kraftfahrzeuges durch den Tempomat derart bewirkt, dass der Abstand konstant gehalten wird.

11. Lenkradbaugruppe nach einem der vorangegangenen Ansprüche, **dadurch gekennzeichnet, dass** die Funktionseinheit einen mittels der Betätigungseinrichtung (17, 18, 19) aktivierbaren Toleranzbereich vorsieht, um den die Zustandsgröße einen Grenzwert der Zustandgröße unterschreiten und / oder überschreiten soll.

12. Lenkradbaugruppe nach einem der vorangegangenen Ansprüche, **dadurch gekennzeichnet, dass** die Sensoreinrichtung dazu vorgesehen und eingerichtet ist, einen Grenzwert der Zustandsgröße von einer Anzeige in einer Umgebung eines Kraftfahrzeuges abzulesen.

13. Lenkradbaugruppe nach einem der vorangegangenen Ansprüche, **dadurch gekennzeichnet, dass** die Sensoreinrichtung dazu vorgesehen und eingerichtet ist, einen Grenzwert der Zustandsgröße aus einem in einer Umgebung eines Kraftfahrzeuges angeordneten Informationsspeicher auszulesen.

14. Lenkradbaugruppe nach einem der vorangegangenen Ansprüche, **dadurch gekennzeichnet, dass** die Sensoreinrichtung dazu vorgesehen und eingerichtet ist einen Grenzwert der Zustandsgröße aus einer Datenbank, insbesondere eine GPS-Datenbank, auszulesen.

15. Lenkradbaugruppe nach einem der vorangegangenen Ansprüche, **gekennzeichnet durch** eine Übertragungseinheit (U), die zum Übertragen von Ausgangssignalen der Sensoreinrichtung (E) zur Anzeigeeinrichtung (8) dient.

16. Lenkradbaugruppe nach einem der Ansprüche 1 bis 5, **dadurch gekennzeichnet, dass** die Zustandsgröße eine momentane Drehzahl eines Motors des Kraftfahrzeuges ist.

17. Lenkradbaugruppe nach Anspruch 16, **dadurch gekennzeichnet, dass** die Sensoreinrichtung (E) zum Ermitteln des momentanen Ganges eines Getriebes des Kraftfahrzeuges ausgebildet ist.

18. Lenkradbaugruppe nach Anspruch 16 oder 17, **dadurch gekennzeichnet, dass** der Vorschlag einen zu verwendenden Gang betrifft, wobei die Annahme des Vorschlages ein Einlegen des vorgeschlagenen Ganges bewirkt.

19. Lenkradbaugruppe nach Anspruch 17 und 18, **dadurch gekennzeichnet, dass** die Funktionseinheit als eine mit der Anzeigeeinrichtung (8) verbundene Auswertelektronik ausgebildet ist, die dazu eingerichtet und vorgesehen ist, den Vorschlag zumindest in Abhängigkeit von der momentanen Drehzahl und dem momentanen Gang einem Fahrer über die Anzeigevorrichtung (8) anzuzeigen.

20. Lenkradbaugruppe nach einem der vorangegangenen Ansprüche, **dadurch gekennzeichnet, dass** die Sensoreinrichtung (E) zur Erfassung weiterer Zustandsgrößen eines Kraftfahrzeuges ausgebildet ist,

21. Lenkradbaugruppe nach Anspruch 20, **dadurch gekennzeichnet, dass** die Anzeigeeinrichtung (8) zur Anzeige der weiteren Zustandsgrößen ausgebildet ist,

22. Lenkradbaugruppe nach Anspruch 20 oder 21, **dadurch gekennzeichnet, dass** die Zustandsgrößen Abstände zwischen einem Kraftfahrzeug und einem Objekt in einer Umgebung des Kraftfahrzeuges sind.

23. Lenkradbaugruppe nach Anspruch 22, **dadurch gekennzeichnet, dass** die Sensoreinrichtung (E) dazu vorgesehen und eingerichtet ist, die Abstände in eine Größe einer Abstellfläche umzusetzen.

24. Lenkradbaugruppe nach einem der Ansprüche 20 bis 23, **dadurch gekennzeichnet, dass** die Sensoreinrichtung (E) dazu vorgesehen und eingerichtet ist, zu ermitteln, ob eine Abstellfläche in der Umgebung des Kraftfahrzeuges groß genug ist, um das Kraftfahrzeug auf dieser Abstellfläche zu parken.

25. Lenkradbaugruppe nach einem der Ansprüche 20 bis 24, **dadurch gekennzeichnet, dass** die Sensoreinrichtung (E) dazu vorgesehen und eingerichtet ist, über die Anzeigeeinrichtung (8) Informationen über eine Abstellfläche anzuzeigen.

26. Lenkradbaugruppe nach einem der Ansprüche 20 bis 25, **dadurch gekennzeichnet, dass** die Funktionseinheit als eine mit der Sensoreinrichtung (E) verbundene Steuerelektronik ausgebildet ist, die zum automatischen Einparken eines Kraftfahrzeuges eingerichtet und vorgesehen ist.

27. Lenkradbaugruppe nach einem der vorangegangenen Ansprüche, **dadurch gekennzeichnet, dass** die Anzeigeeinrichtung (8) an einem Lenkradkranz (5) angeordnet ist, der eine Lenkachse (D) des Lenkrades (5a) zumindest abschnittsweise umläuft.

28. Lenkradbaugruppe nach Anspruch 27, **dadurch gekennzeichnet, dass** die Anzeigeeinrichtung (8) in einer Geradeausfahrtstellung des Lenkrades (5a) entlang der vertikalen Fahrzeugachse (z) oberhalb der Lenkachse (D) angeordnet ist.

29. Lenkradbaugruppe nach einem der vorangegangenen Ansprüche, **dadurch gekennzeichnet, dass** die Anzeigeeinrichtung (8) zum Anzeigen von Fahrinformationen eines Kraftfahrzeuges ausgebildet ist.

30. Lenkradbaugruppe nach einem der vorangegangenen Ansprüche, **gekennzeichnet durch** zumindest eine am Lenkrad (5a) angeordnete Erfassungseinrichtung (10) zum Ermitteln eines Aufmerksamkeitszustandes eines Fahrers eines Kraftfahrzeuges, wobei die Erfassungseinrichtung (10) zum Ansteuern der Anzeigeeinrichtung (8) in Abhängigkeit von dem ermittelten Aufmerksamkeitszustand des Fahrers dient.

31. Lenkradbaugruppe nach Anspruch 30, **dadurch gekennzeichnet, dass** die Erfassungseinrichtung (10) als eine Kamera ausgebildet ist.

32. Lenkradbaugruppe nach Anspruch 30 oder 31, **dadurch gekennzeichnet, dass** die Erfassungseinrichtung (10) benachbart zur Anzeigeeinrichtung (8) angeordnet ist,

33. Lenkradbaugruppe nach Anspruch 27 oder einem der Ansprüche 28 bis 32 soweit rückbezogen auf Anspruch 27, **dadurch gekennzeichnet, dass** die Erfassungseinrichtung (10) am Lenkradkranz (5) angeordnet ist.

34. Lenkradbaugruppe nach Anspruch 27 oder einem der Ansprüche 28 bis 33 soweit rückbezogen auf Anspruch 27, **dadurch gekennzeichnet, dass** die Erfassungseinrichtung (10) in einer Geradeausfahrtstellung des Lenkradkranzes (5) entlang der vertikalen Fahrzeugachse (z) oberhalb der Lenkachse (D) angeordnet ist.

35. Lenkradbaugruppe nach einem der vorangegangenen Ansprüche, **dadurch gekennzeichnet, dass** die Anzeigeeinrichtung (8) zumindest zwei Anzeigeelemente (3, 2) aufweist.

36. Lenkradbaugruppe nach Anspruch 27 und Anspruch 30 und 35, **dadurch gekennzeichnet, dass** die Erfassungseinrichtung (10) entlang des Lenkradkranzes (5) zwischen den zumindest zwei Anzeigenelementen (3, 2) angeordnet ist.

37. Lenkradbaugruppe nach Anspruch 27 und 35 oder 36, **dadurch gekennzeichnet, dass** der Abstand zwischen der Erfassungseinrichtung (10) und jeweils einem der beiden Anzeigeelementen (3, 2) entlang des Lenkradkranzes (5) kleiner ist als die Breite zumindest eines der beiden Anzeigelemente (3, 2).

38. Lenkradbaugruppe nach einem der Ansprüche 30 bis 37, **dadurch gekennzeichnet, dass** weitere Erfassungseinrichtungen (10) zur Erfassung eines Aufmerksamkeitszustandes eines Fahrers eines Kraftfahrzeuges vorgesehen sind, die zum Ansteuern der Anzeigeeinrichtung (8) in Abhängigkeit von dem ermittelten Aufmerksamkeitszustand des Fahrers dienen.

39. Lenkradbaugruppe nach Anspruch 38, **dadurch gekennzeichnet, dass** die weiteren Erfassungseinrichtungen (10) als Kameras ausgebildet sind.

40. Lenkradbaugruppe nach Anspruch 27 und Anspruch 38 oder 39, **dadurch gekennzeichnet, dass** die Erfassungseinrichtungen (10) derart entlang des Lenkradkranzes (5) angeordnet sind, dass zumindest eine der Erfassungseinrichtungen (10) unabhängig von einer Stellung des Lenkradkranzes (5) entlang der vertikalen Fahrzeugachse (z) oberhalb der Lenkachse (D) angeordnet ist.

41. Lenkradbaugruppe nach einem der vorangegangenen Ansprüche soweit rückbezogen auf Anspruch 27, **gekennzeichnet durch** einen um die Lenkachse (D) drehbaren Nabenkörper (6), der über zumindest eine Speiche (7) mit dem Lenkradkranz (5) verbunden ist.

42. Lenkradbaugruppe Anspruch 41, **gekennzeichnet durch** einen Bereich (B) des Lenkradkranzes (5), der die zumindest eine Anzeigeeinrichtung (8) umfasst.

43. Lenkradbaugruppe nach Anspruch 42, **gekennzeichnet durch** ein am Nabenkörper (6) angeordnetes Gassackmodul, mit einem Gassack (G), der zum Schutz des Fahrers in einer entlang der Lenkachse (D) verlaufenden Hauptentfaltungsrichtung entfaltbar ist und beim Entfalten quer zur Lenkachse (D) gegen den Bereich (B) des Lenkradkranzes (5) stoßen kann.

44. Lenkradbaugruppe nach Anspruch 43, **dadurch gekennzeichnet, dass** der Bereich (B) des Lenkradkranzes (5) derart mit dem Gassack (G) zusammenwirkt, dass dieser beim Stoßen gegen den Bereich (B) in der Hauptentfaltungsrichtung abgelenkt wird.

45. Lenkradbaugruppe nach Anspruch 44, **dadurch gekennzeichnet, dass** der Bereich (B) zum Ablenken des sich entfaltenden Gassackes (G) eine Ablenkschräge aufweist.

46. Lenkradbaugruppe nach Anspruch 44 oder 45, **dadurch gekennzeichnet, dass** der Bereich (B) zum Ablenken des sich entfaltenden Gassackes (G) eine Oberfläche (O) mit einem niedrigen Reibungskoeffizienten aufweist.

47. Lenkradbaugruppe nach einem der vorangegangenen Ansprüche, **dadurch gekennzeichnet, dass** die Anzeigeeinrichtung (8) als eine optische Anzeige (1, 2, 3, 11) ausgebildet ist.

48. Lenkradbaugruppe nach Anspruch 47, **dadurch gekennzeichnet, dass** die optische Anzeige zumindest eine LED aufweist.

49. Lenkradbaugruppe nach Anspruch 47 oder 48, **dadurch gekennzeichnet, dass** die optische Anzeige eine Mehrzahl von LEDs aufweist.

50. Lenkradbaugruppe nach Anspruch 49, **dadurch gekennzeichnet, dass** die optische Anzeige ein LED-Feld (1, 2, 11) aufweist.

51. Lenkradbaugruppe nach einem der Ansprüche 47 bis 50, **dadurch gekennzeichnet, dass** die optische Anzeige einen Bildschirm (3) aufweist.

52. Lenkradbaugruppe nach einem der Ansprüche 1 bis 46, **dadurch gekennzeichnet, dass** die Anzeigeeinrichtung (8) als eine akustische Anzeige ausgebildet ist.

53. Lenkradbaugruppe nach einem der Ansprüche 1 bis 46, **dadurch gekennzeichnet, dass** die Anzeigeeinrichtung (8) als eine haptische Anzeige (12) ausgebildet ist.

54. Lenkradbaugruppe nach einem der vorangegangenen Ansprüche, **dadurch gekennzeichnet, dass** die Sensoreinrichtung (E) zum Ermitteln eines Grenzwertes einer Zustandsgröße eines Kraftfahrzeuges ausgebildet ist.

55. Verfahren zum Regeln eines Grenzwertes der Geschwindigkeit eines Kraftfahrzeuges mit einer Lenkradbaugruppe nach einem der vorangegangenen Ansprüche, umfassend die folgenden Schritte:
- Ermitteln eines Grenzwertes der Geschwindigkeit eines Kraftfahrzeuges mittels der Sensoreinrichtung (E), und
- Anzeigen des durch die Sensoreinrichtung (E) ermittelten Grenzwertes der Geschwindigkeit mittels der Anzeigeeinrichtung (8), wobei einem Fahrer mittels des Tempomats über die Anzeigeeinrichtung die Annahme eines durch die Sensoreinrichtung (E) ermittelten Grenzwertes der Geschwindigkeit vorgeschlagen wird,
- Annehmen oder Ablehnen des Vorschlages mittels einer am Lenkrad angeordneten Betätigungseinrichtung (17,18,19),
- Nach Annahme des Vorschlages Regeln der Geschwindigkeit des Kraftfahrzeuges mittels des Tempomats auf den Grenzwert der Geschwindigkeit,

56. Verfahren nach Anspruch 55, **dadurch gekennzeichnet, dass** weitere Zustandsgrößen eines Kraftfahrzeuges mittels der Sensoreinrichtung (E) ermittelt werden.

57. Verfahren nach Anspruch 56, **dadurch gekennzeichnet, dass** als Zustandsgrößen Abstände zwischen einem Kraftfahrzeug und Objekten in einer Umgebung des Kraftfahrzeuges ermittelt werden.

58. Verfahren nach Anspruch 57, **dadurch gekennzeichnet, dass** die Abstände automatisch in die Größe einer Abstellfläche umgesetzt werden.

59. Verfahren nach einem der Ansprüche 56 bis 58, **dadurch gekennzeichnet, dass** eine freie Abstellfläche durch die Sensoreinrichtung (E) erkannt und vermessen wird, wobei automatisch überprüft wird, ob die Abstellfläche groß genug ist, um das Kraftfahrzeug darauf zu parken, und dass einem Fahrer über die Anzeigeeinrichtung (8) Informationen über die Abstellfläche angezeigt werden.

## Claims

1. Steering wheel assembly for a motor vehicle, comprising:
- a steering wheel (5a), and
- a display device (8) arranged on the steering wheel (5a) which cooperates with a sensor device (E) to be arranged on the motor vehicle for detecting at least one parameter of a motor vehicle and which is provided for displaying the parameter detected by means of the sensor device (E),
a functional unit of the motor vehicle for forwarding or converting energy and/or information being coupled to the sensor device (E) and the functional unit being designed and provided to display to a driver via the display device (8) a suggestion for adjusting a parameter of the motor vehicle and an actuator device (17, 18, 19) of the motor vehicle being associated with the functional unit, by means of which the parameter may be adjusted according to the suggestion of the functional unit,
**characterized in that**
- the actuator device (17, 18, 19) is arranged on the steering wheel (5a), and
- the actuator device (17, 18, 19) is configured and provided for accepting and declining the suggestion by acting on the actuator device (17, 18, 19).

2. Steering wheel assembly according to Claim 1 or 2, **characterized in that** the adjustment of the parameter comprises a confirmation of, or an alteration to, the parameter.

3. Steering wheel assembly according to one of the preceding claims, **characterized in that** the actuator device (17, 18, 19) is configured and provided for accepting or declining the suggestion via a single actuation of the actuator device (17, 18, 19).

4. Steering wheel assembly according to one of the preceding claims, **characterized in that** the suggestion may be altered by means of the actuator device (17, 18, 19).

5. Steering wheel assembly according to one of the preceding claims, **characterized in that** the functional unit provides a predefinable time interval within which the actuator device (17, 18, 19) has to be actuated for the effective acceptance of the suggestion.

6. Steering wheel assembly according to one of the preceding claims, **characterized in that** the functional unit is configured as a cruise controller.

7. Steering wheel assembly according to one of the preceding claims, **characterized in that** the parameter is a speed of the motor vehicle.

8. Steering wheel assembly according to one of the preceding claims, **characterized in that** the suggestion offers a limit value of the speed detected by the sensor device (E) for acceptance, the acceptance of the suggestion effecting the restriction of the speed of the motor vehicle to the limit value of the speed by the cruise controller.

9. Steering wheel assembly according to one of Claims 1 to 6, **characterized in that** the parameter is a distance from a vehicle ahead.

10. Steering wheel assembly according to Claim 9, **characterized in that** the suggestion offers a distance from a vehicle ahead for acceptance, the acceptance of the suggestion effecting the regulation of the speed of the motor vehicle by the cruise controller, such that the distance is maintained constant.

11. Steering wheel assembly according to one of the preceding claims, **characterized in that** the functional unit provides a tolerance range which may be activated by the actuator device (17, 18, 19), by which the parameter is intended to fall below and/or exceed a limit value of the parameter.

12. Steering wheel assembly according to one of the preceding claims, **characterized in that** the sensor device is provided and designed to read a limit value of the parameter from a display in a surroundings of a motor vehicle.

13. Steering wheel assembly according to one of the preceding claims, **characterized in that** the sensor device is provided and designed to readout a limit value of the parameter from a information storage arranged in the surroundings of a motor vehicle.

14. Steering wheel assembly according to one of the preceding claims, **characterized in that** the sensor device is provided and designed to readout a limit value of the parameter from a database, in particular a GPS database.

15. Steering wheel assembly according to one of the preceding claims, **characterized by** a transmission unit (U) which serves to transmit output signals of the sensor device (E) to the display device (8).

16. Steering wheel assembly according to one of Claims 1 to 5, **characterized in that** the parameter is a current rotational speed of an engine of the motor vehicle.

17. Steering wheel assembly according to Claim 16, **characterized in that** the sensor device (E) is configured for detecting the current gear of a transmission of the motor vehicle.

18. Steering wheel assembly according to Claim 16 or 17, **characterized in that** the suggestion relates to a gear to be used, the acceptance of the suggestion effecting an engaging of the suggested gear.

19. Steering wheel assembly according to Claims 17 and 18, **characterized in that** the functional unit is configured as evaluation electronics connected to the display device (8), which are designed and provided to display to a driver via the display device (8) the suggestion, at least depending on the current rotational speed and the current gear.

20. Steering wheel assembly according to one of the preceding claims, **characterized in that** the sensor device (E) is configured for detecting further parameters of a motor vehicle.

21. Steering wheel assembly according to Claim 20, **characterized in that** the display device (8) is configured for displaying the further parameter.

22. Steering wheel assembly according to Claim 20 or 21, **characterized in that** the parameters are distances between a motor vehicle and an object in the surroundings of the motor vehicle.

23. Steering wheel assembly according to Claim 22, **characterized in that** the sensor device (E) is provided and designed to convert the distances into a dimension of a parking space.

24. Steering wheel assembly according to one of Claims 20 to 23, **characterized in that** the sensor device (E) is provided and designed to detect whether a parking space in the surrounding of the motor vehicle is large enough, in order to park the motor vehicle on said parking space.

25. Steering wheel assembly according to one of Claims 20 to 24, **characterized in that** the sensor device (E) is provided and designed to display information about a parking space via the display device (8).

26. Steering wheel assembly according to one of Claims 20 to 25, **characterized in that** the functional unit is configured as control electronics connected to the sensor device (E), which are designed and provided for automatically parking a motor vehicle.

27. Steering wheel assembly according to one of the preceding claims, **characterized in that** the display device (8) is arranged on a steering wheel rim (5) which at least partially surrounds a steering axis (D) of the steering wheel (5a).

28. Steering wheel assembly according to Claim 27, **characterized in that** the display device (8) is arranged along the vertical vehicle axis (z) above the steering axis (D) in a straight-ahead driving position of the steering wheel (5a).

29. Steering wheel assembly according to one of the preceding claims, **characterized in that** the display device (8) is configured for displaying driving information of a motor vehicle.

30. Steering wheel assembly according to one of the preceding claims, **characterized by** at least one detection device (10) arranged on the steering wheel (5a) for detecting an attentive state of a driver of a motor vehicle, the detection device (10) serving to activate the display device (8) depending on the detected attentive state of the driver.

31. Steering wheel assembly according to Claim 30, **characterized in that** the detection device (10) is configured as a camera.

32. Steering wheel assembly according to Claim 30 or 31, **characterized in that** the detection device (10) is arranged adjacent to the display device (8).

33. Steering wheel assembly according to Claim 27 or one of Claims 28 to 32, referring back to Claim 27, **characterized in that** the detection device (10) is arranged on the steering wheel rim (5).

34. Steering wheel assembly according to Claim 27 or one of Claims 28 to 33, referring back to Claim 27, **characterized in that** the detection device (10) is arranged along the vertical vehicle axis (z) above the steering axis (D) in a straight-ahead driving position of the steering wheel rim (5).

35. Steering wheel assembly according to one of the preceding claims, **characterized in that** the display device (8) comprises at least two display elements (3, 2).

36. Steering wheel assembly according to Claim 27 and Claim 30 and 35, **characterized in that** the detection device (10) is arranged along the steering wheel rim (5) between the at least two display elements (3, 2).

37. Steering wheel assembly according to Claim 27 and 35 or 36, **characterized in that** the distance between the detection device (10) and respectively one of the two display elements (3, 2) along the steering wheel rim (5) is smaller than the width at least of one of the two display elements (3, 2).

38. Steering wheel assembly according to one of Claims 30 to 37, **characterized in that** further detection devices (10) for detecting an attentive state of a driver of a motor vehicle are provided which serve to activate the display device (8) depending on the detected attentive state of the driver.

39. Steering wheel assembly according to Claim 38, **characterized in that** the further detection devices (10) are configured as cameras.

40. Steering wheel assembly according to Claim 27 and Claim 38 or 39, **characterized in that** the detection devices (10) are arranged along the steering wheel rim (5) such that at least one of the detection devices (10) is arranged irrespective of a position of the steering wheel rim (5) along the vertical vehicle axis (z) above the steering axis (D).

41. Steering wheel assembly according to one of the preceding claims, referring back to Claim 27, **characterized by** a hub body (6) which may be rotated about the steering axis (D) and which is connected to the steering wheel rim (5) via at least one spoke (7).

42. Steering wheel assembly according to Claim 41, **characterized by** a region (B) of the steering wheel rim (5) which comprises the at least one display device (8).

43. Steering wheel assembly according to Claim 42, **characterized by** an airbag module arranged on the hub body (6) with an airbag (G), which may be deployed to protect the driver in a main deployment direction extending along the steering axis (D) and when deployed may impact against the region (B) of the steering wheel rim (5) transversely to the steering axis (D).

44. Steering wheel assembly according to Claim 43, **characterized in that** the region (B) of the steering wheel rim (5) cooperates with the airbag (G) such that said airbag, when impacting against the region (B), is deflected in the main deployment direction.

45. Steering wheel assembly according to Claim 44, **characterized in that** the region (B) for deflecting the airbag (G) which is being deployed comprises a deflecting ramp.

46. Steering wheel assembly according to Claim 44 or 45, **characterized in that** the region (B) for deflecting the airbag (G) which is being deployed comprises a surface (O) with a low coefficient of friction.

47. Steering wheel assembly according to one of the preceding claims, **characterized in that** the display device (8) is configured as an optical display (1, 2, 3, 11).

48. Steering wheel assembly according to Claim 47, **characterized in that** the optical display comprises at least one LED.

49. Steering wheel assembly according to Claim 47 or 48, **characterized in that** the optical display comprises a plurality of LEDs.

50. Steering wheel assembly according to Claim 49, **characterized in that** the optical display comprises an LED field (1, 2, 11).

51. Steering wheel assembly according to one of Claims 47 to 50, **characterized in that** the optical display comprises a screen (3).

52. Steering wheel assembly according to one of Claims 1 to 46, **characterized in that** the display device (8) is configured as an acoustic display.

53. Steering wheel assembly according to one of Claims 1 to 46, **characterized in that** the display device (8) is configured as a haptic display (12).

54. Steering wheel assembly according to one of the preceding claims, **characterized in that** the sensor device (E) is configured for detecting a limit value of a parameter of a motor vehicle.

55. Method for adjusting a limit value of the speed of a motor vehicle with a steering wheel assembly according to one of the preceding claims, comprising the following steps:
- detecting a limit value of the speed of a motor vehicle by means of the sensor device (E) and
- displaying the limit value of the speed detected by the sensor device (E) by means of the display device (8), the acceptance of a limit value of the speed detected by the sensor device (E) being suggested to a driver by means of the cruise controller via the display device,
- accepting or declining the suggestion by means of an actuator device (17, 18, 19) arranged on the steering wheel,
- after accepting the suggestion, regulating the speed of the motor vehicle by means of the cruise controller to the limit value of the speed.

56. Method according to Claim 55, **characterized in that** further parameters of a motor vehicle are detected by means of the sensor device (E).

57. Method according to Claim 56, **characterized in that** distances between a motor vehicle and objects in the surroundings of the motor vehicle are detected as parameters.

58. Method according to Claim 57, **characterized in that** the distances are automatically converted into the variable of a parking space.

59. Method according to one of Claims 56 to 58, **characterized in that** a free parking space is identified and measured by the sensor device (E), it being automatically verified whether the parking space is sufficiently large in order to park the motor vehicle thereon, and **in that** information about the parking space is displayed to a driver via the display device (8).

## Revendications

1. Ensemble relatif à un volant de direction pour un véhicule automobile, comprenant :
- un volant de direction (5a), et
- un dispositif d'affichage (8) agencé sur le volant de direction (5a), qui est en liaison de coopération avec un système capteur (E) destiné à être agencé sur le véhicule automobile pour déterminer au moins une grandeur d'état d'un véhicule automobile, et qui est prévu pour afficher la valeur d'état déterminée au moyen du système capteur (E),
une unité fonctionnelle du véhicule automobile étant couplée au système capteur (E) pour transmettre ou convertir de l'énergie et/ou des informations, et l'unité fonctionnelle étant organisée et prévue pour indiquer à un conducteur via le dispositif d'affichage (8) une proposition pour un réglage d'une grandeur d'état du véhicule automobile, et un dispositif d'actionnement (17, 18, 19) du véhicule automobile étant associé à l'unité fonctionnelle, au moyen duquel la grandeur d'état peut être réglée selon la proposition de l'unité fonctionnelle,
**caractérisé en ce que** :
- le dispositif d'actionnement (17, 18, 19) est agencé sur le volant de direction (5 a), et
- le dispositif d'actionnement (17, 18, 19) est réalisé et prévu pour accepter et pour refuser la proposition par action sur le dispositif d'actionnement (17, 18, 19).

2. Ensemble relatif à un volant de direction selon la revendication 1 ou 2, **caractérisé en ce que** le réglage de la grandeur d'état inclut une confirmation ou une modification de la grandeur d'état.

3. Ensemble relatif à un volant de direction selon l'une des revendications précédentes, **caractérisé en ce que** le dispositif d'actionnement (17, 18, 19) est réalisé et prévu pour accepter ou refuser la proposition par actionnement unique du dispositif d'actionnement (17, 18, 19).

4. Ensemble relatif à un volant de direction selon l'une des revendications précédentes, **caractérisé en ce que** la proposition peut être modifiée au moyen du dispositif d'actionnement (17, 18, 19).

5. Ensemble relatif à un volant de direction selon l'une des revendications précédentes, **caractérisé en ce que** l'unité fonctionnelle prévoit une durée temporelle prédéfinissable à l'intérieur de laquelle le dispositif d'actionnement (17, 18, 19) doit être actionné pour accepter effectivement la proposition.

6. Ensemble relatif à un volant de direction selon l'une des revendications précédentes, **caractérisé en ce que** l'unité fonctionnelle est réalisée sous forme de régulateur de vitesse.

7. Ensemble relatif à un volant de direction selon l'une des revendications précédentes, **caractérisé en ce que** la grandeur d'état est une vitesse du véhicule.

8. Ensemble relatif à un volant de direction selon l'une des revendications précédentes, **caractérisé en ce que** la proposition présente à l'acceptation une valeur limite, déterminée par le système capteur (E), de la vitesse, l'acceptation de la proposition ayant pour effet de limiter la vitesse du véhicule automobile à la valeur limite de la vitesse par le régulateur de vitesse.

9. Ensemble relatif à un volant de direction selon l'une des revendications 1 à 6, **caractérisé en ce que** la grandeur d'état est une distance par rapport à un véhicule précédent.

10. Ensemble relatif à un volant de direction selon la revendication 9, **caractérisé en ce que** la proposition présente à l'acceptation une distance par rapport à un véhicule précédent, l'acceptation de la proposition ayant pour effet de réguler la vitesse du véhicule automobile par le régulateur de vitesse de telle façon que la distance est maintenue constante.

11. Ensemble relatif à un volant de direction selon l'une des revendications précédentes, **caractérisé en ce que** l'unité fonctionnelle prévoit une plage de tolérance susceptible d'être activée au moyen du dispositif d'actionnement (17, 18, 19), à raison de laquelle la grandeur d'état peut passer au-dessous et/ou au-dessus d'une valeur limite de la grandeur d'état.

12. Ensemble relatif à un volant de direction selon l'une des revendications précédentes, **caractérisé en ce que** le système capteur est prévu et organisé pour lire une valeur limite de la grandeur d'état depuis un indicateur dans l'environnement d'un véhicule automobile.

13. Ensemble relatif à un volant de direction selon l'une des revendications précédentes, **caractérisé en ce que** le système capteur est prévu et organisé pour lire une valeur limite de la grandeur d'état à partir d'une mémoire d'informations agencée dans l'environnement d'un véhicule automobile.

14. Ensemble relatif à un volant de direction selon l'une des revendications précédentes, **caractérisé en ce que** le système capteur est prévu et organisé pour lire une valeur limite de la grandeur d'état à partir d'une base de données, en particulier à partir d'une base de données GPS.

15. Ensemble relatif à un volant de direction selon l'une des revendications précédentes, **caractérisé par** une unité de transmission (U), qui sert à la transmission de signaux de sortie du système capteur (E) vers le dispositif d'affichage (8).

16. Ensemble relatif à un volant de direction selon l'une des revendications 1 à 5, **caractérisé en ce que** la grandeur d'état est un régime momentané d'un moteur du véhicule automobile.

17. Ensemble relatif à un volant de direction selon la revendication 16, **caractérisé en ce que** le système capteur (E) est réalisé pour déterminer le rapport de vitesse momentané d'une boîte de vitesses du véhicule automobile.

18. Ensemble relatif à un volant de direction selon la revendication 16 ou 17, **caractérisé en ce que** la proposition concerne un rapport de vitesse à utiliser, l'acceptation de la proposition ayant pour effet d'engager le rapport de vitesse proposé.

19. Ensemble relatif à un volant de direction selon la revendication 17 et 18, **caractérisé en ce que** l'unité fonctionnelle est réalisée comme une unité électronique d'évaluation reliée au dispositif d'affichage (8), qui est organisée et prévue pour afficher la proposition, via le dispositif d'affichage (8), au moins en fonction du régime momentané et du rapport de vitesse momentané, à destination d'un conducteur.

20. Ensemble relatif à un volant de direction selon l'une des revendications précédentes, **caractérisé en ce que** le système capteur (E) est réalisé pour détecter d'autres grandeurs d'état d'un véhicule automobile.

21. Ensemble relatif à un volant de direction selon la revendication 20, **caractérisé en ce que** le dispositif d'affichage (8) est réalisé pour afficher les autres grandeurs d'état.

22. Ensemble relatif à un volant de direction selon la revendication 20 ou 21, **caractérisé en ce que** les grandeurs d'état sont des distances entre un véhicule automobile et un objet dans l'environnement du véhicule automobile.

23. Ensemble relatif à un volant de direction selon la revendication 22, **caractérisé en ce que** le système capteur (E) est prévu et organisé pour convertir les distances en une taille d'une surface de parcage.

24. Ensemble relatif à un volant de direction selon l'une des revendications 20 à 23, **caractérisé en ce que** le système capteur (E) est prévu et organisé pour déterminer si une surface de parcage dans l'environnement du véhicule automobile est suffisamment grande pour stationner le véhicule automobile sur cette surface de parcage.

25. Ensemble relatif à un volant de direction selon l'une des revendications 20 à 24, **caractérisé en ce que** le système capteur (E) est prévu et organisé pour afficher au moyen du dispositif d'affichage (8) des informations concernant une surface de parcage.

26. Ensemble relatif à un volant de direction selon l'une des revendications 20 à 25, **caractérisé en ce que** l'unité fonctionnelle est réalisée comme une unité électronique de commande reliée au système capteur (E), qui est organisée et prévue pour le stationnement automatique d'un véhicule automobile.

27. Ensemble relatif à un volant de direction selon l'une des revendications précédentes, **caractérisé en ce que** le dispositif d'affichage (8) est agencé sur une couronne (5) du volant, qui entoure au moins par secteur un axe de direction (D) du volant (5a).

28. Ensemble relatif à un volant de direction selon la revendication 27, **caractérisé en ce que** le dispositif d'affichage (8) est agencé, dans la position du volant (5a) pour la circulation en ligne droite, le long de l'axe vertical du véhicule (z) au-dessus de l'axe de direction (D).

29. Ensemble relatif à un volant de direction selon l'une des revendications précédentes, **caractérisé en ce que** le dispositif d'affichage (8) est réalisé pour afficher des informations de conduite d'un véhicule automobile.

30. Ensemble relatif à un volant de direction selon l'une des revendications précédentes, **caractérisé par** au moins un dispositif de saisie (10) agencé sur le volant (5a) pour déterminer un état d'attention d'un conducteur du véhicule automobile, le dispositif de saisie (10) servant à activer le dispositif d'affichage (8) en fonction de l'état d'attention déterminé du conducteur.

31. Ensemble relatif à un volant de direction selon la revendication 30, **caractérisé en ce que** le dispositif de saisie (30) est sous forme d'une caméra.

32. Ensemble relatif à un volant de direction selon la revendication 30 ou 31, **caractérisé en ce que** le dispositif de saisie (10) est agencé au voisinage du dispositif d'affichage (8).

33. Ensemble relatif à un volant de direction selon la revendication 27 ou selon l'une des revendications 28 à 32 prise en dépendance de la revendication 27, **caractérisé en ce que** le dispositif de saisie (10) est agencé sur la couronne du volant (5).

34. Ensemble relatif à un volant de direction selon la revendication 27 ou selon l'une des revendications 28 à 33 prise en dépendance de la revendication 27, **caractérisé en ce que** le dispositif de saisie (10) est agencé, dans la position de la couronne (5) du volant pour la circulation en ligne droite, le long de l'axe vertical (z) du véhicule au-dessus de l'axe de direction (D).

35. Ensemble relatif à un volant de direction selon l'une des revendications précédentes, **caractérisé en ce que** le dispositif d'affichage (8) comprend au moins deux éléments d'affichage (3, 2).

36. Ensemble relatif à un volant de direction selon la revendication 27 et la revendication 30 et 35, **caractérisé en ce que** le dispositif de saisie (10) est agencé le long de la couronne (5) du volant entre lesdits au moins deux éléments d'affichage (3, 2).

37. Ensemble relatif à un volant de direction selon la revendication 27 et la revendication 35 ou 36, **caractérisé en ce que** la distance entre le dispositif de saisie (10) et respectivement l'un des deux éléments d'affichage (3, 2) le long de la couronne (5) du volant est inférieure à la largeur de l'un au moins des deux éléments d'affichage (3, 2).

38. Ensemble relatif à un volant de direction selon l'une des revendications 30 à 37, **caractérisé en ce qu'**il est prévu d'autres dispositifs de saisie (10) pour détecter un état d'attention du conducteur du véhicule, qui servent à activer le dispositif d'affichage (8) en fonction de l'état d'attention déterminé du conducteur.

39. Ensemble relatif à un volant de direction selon la revendication 38, **caractérisé en ce que** les autres dispositifs de saisie (10) sont réalisés sous forme de caméras.

40. Ensemble relatif à un volant de direction selon la revendication 27 et la revendication 38 ou 39, **caractérisé en ce que** les dispositifs de saisie (10) sont agencés le long de la couronne (5) du volant de telle façon que l'un au moins des dispositifs de saisie (10) est agencé le long de l'axe vertical (z) du véhicule au-dessus de l'axe de direction (D) indépendamment de la position de la couronne (5) du volant.

41. Ensemble relatif à un volant de direction selon l'une des revendications précédentes, prise en dépendance de la revendication 27, **caractérisé par** un corps de moyeu (6), pivotant autour de l'axe de direction (D), qui est relié à la couronne (5) du volant par au moins un rayon (7).

42. Ensemble relatif à un volant de direction selon la revendication 41, **caractérisé par** une zone (B) de la couronne (5) du volant qui comprend ledit au moins un dispositif d'affichage (8).

43. Ensemble relatif à un volant de direction selon la revendication 42, **caractérisé par** un module de sac à gaz agencé sur le corps de moyeu (6), avec un sac à gaz (G) qui, pour protéger le conducteur, est déployable dans une direction de déploiement principale s'étendant le long de l'axe de direction (D) et qui, lors du déploiement transversalement à l'axe de direction (D) peut venir heurter contre la zone (B) de la couronne (5) du volant.

44. Ensemble relatif à un volant de direction selon la revendication 43, **caractérisé en ce que** la zone (B) de la couronne (5) du volant coopère avec le sac à gaz (G) de telle façon que celui-ci, lorsqu'il vient heurter contre la zone (B), est dévié dans la direction de déploiement principale.

45. Ensemble relatif à un volant de direction selon la revendication 44, **caractérisé en ce que** la zone (B) comprend une pente de déviation pour faire dévier le sac à gaz qui se déploie (G).

46. Ensemble relatif à un volant de direction selon la revendication 44 ou 45, **caractérisé en ce que** la zone (B) pour faire dévier le sac à gaz qui se déploie (G) présente une surface (O) avec un faible coefficient de friction.

47. Ensemble relatif à un volant de direction selon l'une des revendications précédentes, **caractérisé en ce que** le dispositif d'affichage (8) est réalisé comme un affichage optique (1, 2, 3, 11).

48. Ensemble relatif à un volant de direction selon la revendication 47, **caractérisé en ce que** l'affichage optique comprend au moins une diode électroluminescente.

49. Ensemble relatif à un volant de direction selon la revendication 47 ou 48, **caractérisé en ce que** l'affichage optique comprend une pluralité de diodes électroluminescentes.

50. Ensemble relatif à un volant de direction selon la revendication 49, **caractérisé en ce que** l'affichage optique comprend un champ de diodes électroluminescentes (1, 2, 11).

51. Ensemble relatif à un volant de direction selon l'une des revendications 47 à 50, **caractérisé en ce que** l'affichage optique comprend un écran (3).

52. Ensemble relatif à un volant de direction selon l'une des revendications 1 à 46, **caractérisé en ce que** le dispositif d'affichage (8) est réalisé comme un indicateur acoustique.

53. Ensemble relatif à un volant de direction selon l'une des revendications 1 à 46, **caractérisé en ce que** le dispositif d'affichage (8) est réalisé comme un indicateur tactile (12).

54. Ensemble relatif à un volant de direction selon l'une des revendications précédentes, **caractérisé en ce que** le système capteur (E) est réalisé pour déterminer une valeur limite d'une grandeur d'état du véhicule automobile.

55. Procédé pour régler une valeur limite de la vitesse d'un véhicule automobile avec un ensemble relatif à un volant de direction selon l'une des revendications précédentes, comprenant les étapes suivantes :
- détermination d'une valeur limite de la vitesse d'un véhicule automobile au moyen du système capteur (E), et
- affichage de la valeur limite de la vitesse, déterminée par le système capteur (E), au moyen du dispositif d'affichage (8), proposant à un conducteur au moyen du régulateur de vitesse et via le dispositif d'affichage, l'acceptation d'une valeur limite de la vitesse déterminée par le système capteur (E),
- acceptation ou le refus de la proposition au moyen d'un dispositif d'actionnement (17, 18, 19) agencé sur le volant de direction,
- après acceptation de la proposition, régulation de la vitesse du véhicule automobile au moyen du régulateur de vitesse à la valeur limite de la vitesse.

56. Procédé selon la revendication 55, **caractérisé en ce que** d'autres grandeurs d'état du véhicule automobile sont déterminées au moyen du système capteur (E).

57. Procédé selon la revendication 56, **caractérisé en ce que** l'on détermine à titre de grandeur d'état des distances entre un véhicule automobile et des objets dans l'environnement du véhicule.

58. Procédé selon la revendication 57, **caractérisé en ce que** les distances sont converties automatiquement en une taille d'une surface de parcage.

59. Procédé selon l'une des revendications 56 à 58, **caractérisé en ce qu'**une surface de parcage libre est reconnue et mesurée par le système capteur (E), et dans lequel on vérifie automatiquement si la surface de parcage est suffisamment grande pour stationner le véhicule sur celle-ci, et **en ce que** l'on affiche pour un conducteur via le dispositif d'affichage (8) des informations concernant la surface de parcage.
